# EUROPÄISCHE PATENTANMELDUNG

(11) **EP 4 663 299 A1**
(43) Veröffentlichungstag der Anmeldung: **17.12.2025**
(21) Anmeldenummer: 25176003.9
(22) Anmeldetag: 13.05.2025
(51) Int. Cl.: B01L 9/00

(54) **TRANSFERVORRICHTUNG, TRANSFERSYSTEM UND PIPETTIERSYSTEM**

(30) Priorität: 10.06.2024 DE 102024116188
(71) Anmelder: Analytik Jena GmbH+Co. KG, 07745 Jena (DE)
(72) Erfinder: Schöppe, Torsten, 07747 Jena (DE); Purmann, Sebastian, 37079 Göttingen (DE); Kaiser, Jan, 09366 Stollberg (DE)
(74) Vertreter: Endress + Hauser Group Services (Deutschland) AG+Co. KG

(57) **Zusammenfassung**

Die Erfindung bezieht sich auf eine Transfervorrichtung (40) zum Einbringen eines Pipettenträgers (41) in eine Pipettiervorrichtung (42), mit
- einer Kammstruktur (43) mit einer Längsstrebe (44) und einer Mehrzahl an rechtwinklig dazu angeordneten Querstreben (45, 46), welche parallel und äquidistant zueinander angeordnet sind und welche zwei äußere Querstreben (45) und mehrere zwischen den äußeren Querstreben (45) angeordneten inneren Querstreben (46) umfassen, wobei die Längsstrebe (44) und die beiden äußeren Querstreben (45) in Form eines dreiseitigen Rahmens (47) ausgebildet sind, wobei die Kammstruktur (43) eine Oberseite (57) und eine Unterseite (58) aufweist,
- wobei die inneren Querstreben (46) einen sich in Richtung der Oberseite (57) verjüngenden konischen Querschnitt aufweisen.

Die Erfindung bezieht sich ferner auf ein Transfersystem (55) und ein Pipettiersystem (80).

## Beschreibung

Die Erfindung betrifft eine Transfervorrichtung zum Einbringen eines mit Pipettenspitzen bestückten Pipettenträgers in einen Pipettierautomaten, ein Transfersystem umfassend eine Transfervorrichtung und einen Pipettenträger und ein Pipettiersystem umfassend ein Transfersystem und einen Pipettierautomaten. Die Pipettenspitzen weisen einen distalen Endbereich und einen proximalen Endbereich mit einem Bund auf.

Repetitive Aufgaben im Labor werden zunehmend von automatisierten Laborgeräten übernommen. Insbesondere für biochemische Analysen im Bereich der Chemie und Pharmazie sind Systeme für die automatisierte Handhabung von flüssigen Proben erwünscht. So dienen sogenannte Liquid Handling Systeme zur Aufbereitung von Proben und/oder zur Analyse der aufbereiteten Proben. Solche Laborgeräte sind auch unter Begriffen wie Pipettierroboter oder Pipettier- und Analysegerät bekannt. Aufgaben dieser Pipettiervorrichtungen sind unter anderem die Zugabe und Entnahme von definierten Volumina an Flüssigkeiten in Laborelementen, um beispielsweise durch die Zugabe eines Reagenz eine biochemische Reaktion anzustoßen, sowie die Vorbereitung der Proben für die anschließende Vermessung in einem Analysegerät, wie zum Beispiel das Trocknen der Proben. Als Analysegeräte kommen alle Geräte infrage, welche mindestens eine chemische und/oder physikalische Information der Probe bestimmen, wie Geräte für die Spektroskopie und Spektrometrie, aber auch pH- und Leitfähigkeitssonden, sowie weitere Geräte.

Entsprechende automatisierte Pipettiervorrichtungen beinhalten eine, in der Regel mehrere, Pipetten, welche häufig in, mitunter austauschbaren, Pipettierköpfen angeordnet sind. Einfache automatisierte Pipettier- bzw. Dosiervorrichtungen geben lediglich eine definierte Menge einer Flüssigkeit aus, während in größeren automatisierten Pipettiervorrichtungen die Pipettierköpfe in zwei oder drei Raumrichtungen verfahrbar sind. Komplexere automatisierte Pipettiervorrichtungen übernehmen häufig zusätzliche Aufgaben wie den Transport und die Handhabung von Laborelementen sowie das Mischen und das Inkubieren von Proben.

Eine Pipette dient zur Aufnahme und Abgabe von definierten Volumina an Flüssigkeiten. In der Regel ist die Pipette so ausgestaltet, dass die Flüssigkeit nicht ins Innere der Pipette gelangt. Stattdessen wird eine Pipettenspitze auf einen Endbereich der Pipette aufgesetzt, in welche die Flüssigkeit aufgenommen wird. Bei manuellen Pipetten mit nur einem Pipettierkanal, welcher durch Anlegen eines entsprechenden Unter- oder Überdrucks die Aufnahme und Abgabe eines definierten Volumens einer Flüssigkeit in und aus der Pipettenspitze regelt, ist der Endbereich der Pipette in der Regel konisch oder schaftartig geformt. Die Pipettenspitze ist dabei kraftschlüssig mit dem Endbereich der Pipette verbunden und teilweise zusätzlich mit einem Dichtelement, beispielsweise einem O-Ring, gesichert.

Mehrkanalpipettiervorrichtungen ermöglichen es eine Vielzahl von Volumina gleichzeitig handzuhaben. Anstelle eines einzelnen Pipettierkanals weisen sie mehrere oder viele Pipettierkanäle auf. Eine solche Mehrkanalpipettiervorrichtung ist aus der DE 20 2008 013 533 U1 bekannt geworden. So können beispielsweise zwischen 4 und 384 Proben gleichzeitig mit einer definierten Menge an Flüssigkeit versetzt werden. Die Pipettierkanäle sind in einer Basisplatte angebracht. Als Alternative zum Aufnehmen der Pipettenspitzen auf einen konischen oder schaftartigen Endbereich der Pipette wird bei Mehrkanalpipetten häufig eine Dichtplatte eingesetzt, welche elastische Eigenschaften besitzt und gegen welche die Pipettenspitzen mit einer definierten Kraft gedrückt werden. Die Dichtplatte schließt die Basisplatte ab und führt wie die Basisplatte die Pipettierkanäle. Durch das aktive Andrücken der Pipettenspitzen gegen die Dichtplatte wird sichergestellt, dass bei Anlegen eines Unterdrucks ein definiertes Volumen an Flüssigkeit in die Pipettenspitze aufgenommen und in dieser gehalten werden kann, bis die Flüssigkeit abgegeben wird. Bei einer Vielzahl von verwendeten Pipettierkanälen und der entsprechenden Vielzahl von Pipettenspitzen ist darauf zu achten, dass jede Pipettenspitze mittels der Dichtplatte abgedichtet ist.

Die Pipettenspitzen werden häufig auf sogenannten Magazinen bereitgestellt. Diese Magazine sind in der Regel planare, biegesteife Platten mit Durchgangslöchern, in welche die Pipettenspitzen aufgenommen sind. Ein solches, mit Pipettenspitzen bestücktes Magazin wird dann in Richtung der Dichtplatte bewegt, so dass die Pipettenspitzen gegen die Dichtplatte gedrückt werden. Idealerweise sind die Längsachsen der Pipettenspitzen dabei parallel zur Querschnittsebene der Dichtplatte angeordnet, um ein optimales Abdichten der Pipettenspitzen zu ermöglichen. Ein derartiges Magazin ist beispielsweise in der DE 20 2020 100 836 U1 offenbart.

Die Magazine werden in der Regel nur einmal benutzt und dann entsorgt, was einen hohen Material- und Kostenbedarf nach sich zieht.

Der vorliegenden Anmeldung liegt daher die Aufgabe zugrunde, eine Transfervorrichtung, ein Transfersystem und ein Pipettiersystem anzugeben, welche gegenüber herkömmlichen Lösungen Material einsparen.

Erfindungsgemäß wird die Aufgabe gelöst durch eine Transfervorrichtung nach Anspruch 1, einem Transfersystem nach Anspruch 14 und einem Pipettiersystem nach Anspruch 15.

Hinsichtlich der Transfervorrichtung wird die Aufgabe erfindungsgemäß gelöst durch eine Transfervorrichtung zum Einbringen eines Pipettenträgers in eine Pipettiervorrichtung, mit
- einer Kammstruktur mit einer Längsstrebe und einer Mehrzahl an rechtwinklig dazu angeordneten Querstreben, welche parallel und äquidistant zueinander angeordnet sind und welche zwei äußere Querstreben und mehrere zwischen den äußeren Querstreben angeordnete innere Querstreben umfassen, wobei die Längsstrebe und die beiden äußeren Querstreben in Form eines dreiseitigen Rahmens ausgebildet sind, wobei die Kammstruktur eine Oberseite und eine Unterseite aufweist,
- wobei die inneren Querstreben einen sich in Richtung der Oberseite verjüngenden konischen Querschnitt aufweisen.

Die Transfervorrichtung ist mehrfach verwendbar, während der Pipettenträger, also bspw. der Einzelplattenträger oder Doppelplattenträger, in der Regel als Einmalartikel ausgestaltet ist. Anstatt ein vollständiges Magazin zu entsorgen, muss nur der Pipettenträger entsorgt werden, während die Transfervorrichtung weiterhin benutzt werden kann. Auf diese Weise werden Material und Kosten gespart. Die Transfervorrichtung kann durch ein Spritzgussverfahren hergestellt sein und beispielsweise aus einem Kunststoff bestehen. Die Transfervorrichtung kann aus einem Metall oder einer Metalllegierung bestehen oder zumindest ein Metall umfassen. Die Transfervorrichtung kann einteilig ausgestaltet sein. Insbesondere ist die Längsstrebe stoffschlüssig mit den Querstreben verbunden. Die inneren Querstreben können dazu ausgestaltet sein, den Pipettenträger aufzunehmen.

Der sich verjüngende konische Querschnitt dient der besseren Kraftübertragung von einer Pipettiervorrichtung auf die Transfervorrichtung. Damit kann eine Kraft, welche von einer Unterseite der Kammstruktur in Richtung der Oberseite der Kammstruktur ausgeübt wird, vorteilhaft an die Oberseite der Kammstruktur übertragen werden, so dass die Bünde der Pipettenspitzen zuverlässig gegen eine Dichtplatte der Pipettiervorrichtung abgedichtet werden.

In einer Ausgestaltung ist der konische Querschnitt derart ausgestaltet, dass der konische Querschnitt und ein Außendurchmesser der Pipettenspitzen über die ganze Höhe der inneren Querstreben aneinander angepasst sind. In dieser Ausgestaltung ist der Kraftverlust bei der Kraftübertragung von der Pipettiervorrichtung auf die Transfervorrichtung minimiert.

In einer weiteren Ausgestaltung weist die Transfervorrichtung mindestens einem am Rahmen angeordnetem Halteelement auf, welches derart ausgestaltet ist, dass der Pipettenträger in mindestens einer Achse in der Transfervorrichtung arretierbar ist. Die Arretierung verhindert ein Verrutschen des Pipettenträgers in der Transfervorrichtung, insbesondere während eines Transports oder während eines Einbringens der Transfervorrichtung in eine Pipettiervorrichtung. Das Halteelement ist vorzugsweise in Richtung der Kammstruktur orientiert. Die Kammstruktur kann eine Oberseite und eine Unterseite aufweisen. Bevorzugt ist das mindestens eine Halteelement an der Oberseite angeordnet.

In einer Ausgestaltung ist das mindestens eine Halteelement ein Überhang, eine Ausnehmung, ein Vorsprung und/oder eine Ausbuchtung.

Insbesondere ist das mindestens eine Halteelement als Radiensegment oder Kreissegment ausgestaltet.

In einer alternativen Ausgestaltung weist das mindestens eine Halteelement eine Feder, einen Magneten und/oder ein Drehelement auf.

In einer Weiterbildung weist die Transfervorrichtung einen an der Längsstrebe angeordneten Haltegriff auf. Der Haltegriff dient insbesondere zum Aufnehmen der Transfervorrichtung mittels eines Bedieners oder eines Roboters.

Bevorzugt weist der Haltegriff ein Zentrierelement, insbesondere eine Öffnung, auf, welches derart ausgestaltet ist, dass die Transfervorrichtung automatisiert bewegt werden kann. Beispielsweise kann ein Roboter in das Zentrierelement bzw. die Öffnung eingreifen, um die Transfervorrichtung aufzunehmen und zu transportieren.

In einer Ausgestaltung weist der Rahmen im Bereich der Längsstrebe eine Rahmenaussparung auf, welche insbesondere mittig auf der Längsstrebe angeordnet ist.

Vorzugsweise ist die Rahmenaussparung derart ausgestaltet, dass der Rahmen durch die Rahmenaussparung auf eine Höhe des Haltegriffs abgesenkt ist. Bevorzugt erstreckt sich die Rahmenaussparung im Wesentlichen über die Breite des Haltegriffs. Insbesondere kann die Rahmenaussparung an einen Griff oder ein Greifelement des Pipettenträgers, insbesondere des Einzelplattenträgers oder des Doppelplattenträgers, angepasst sein. Die Rahmenaussparung kann derart ausgestaltet sein, dass der Griff oder das Greifelement des Pipettenträgers in die Rahmenaussparung einführbar ist. Ein Bediener oder ein Roboter kann somit den Griff oder das Greifelement in der Rahmenaussparung greifen und durch eine Kraftausübung in Richtung der Unterseite der Kammstruktur eine Arretierung des Pipettenträgers in der Transfervorrichtung lösen und so den Pipettenträger aus der Transfervorrichtung entfernen.

In einer weiteren Ausgestaltung weist der Rahmen mindestens zwei Orientierungselemente auf, welche derart ausgestaltet sind, dass die Transfervorrichtung automatisiert in die Pipettiervorrichtung einbringbar ist. Die Orientierungselemente dienen der Führung der Transfervorrichtung bei der Aufnahme in die Pipettiervorrichtung.

In einer Weiterbildung weist der Rahmen mindestens eine umlaufende Führungsnut auf. Die mindestens eine Führungsnut unterstützt das Einbringen eines Pipettenträgers in die Transfervorrichtung, indem der Pipettenträger in der Führungsnut geführt wird. Die mindestens eine Führungsnut kann auf der Oberseite oder der Unterseite der Kammstruktur angeordnet sein. Beispielsweise kann die untere Platte und/oder die obere Platte eines Doppelplattenträgers in die mindestens eine Führungsnut eingreifen.

In einer Ausgestaltung weist der Rahmen mindestens eine Anschlagfläche auf, welche zumindest entlang der Längsstrebe angeordnet ist, und welche auf derselben Höhe des Rahmens wie die Oberseite der inneren Querstreben angeordnet ist oder welche zwischen den Querstreben angeordnet ist. Insbesondere kann die Anschlagfläche, welche auf derselben Höhe des Rahmens wie die Oberseite der inneren Querstreben angeordnet ist, den Rahmen umlaufen. Die Anschlagfläche dient zur Führung des Pipettenträgers beim Einbringen in die Transfervorrichtung.

In einer Ausgestaltung weist der Rahmen ein Zugriffselement auf, wie beispielsweise ein Absatz, eine Kante oder eine Fläche, mittels welchem eine Kraft, insbesondere in Richtung der Oberseite der Kammstruktur, auf die Transfervorrichtung ausübbar ist. Die Pipettiervorrichtung kann mittels des Zugriffselements Kraft auf die Transfervorrichtung ausüben, um die Pipettenspitzen gegen eine Dichtplatte abzudichten.

Bevorzugt weisen die inneren Querstreben an einem der Längsstrebe abgewandten Ende ein Eingriffselement, insbesondere eine Kante oder einen Absatz, auf, mittels welchem eine Kraft auf die Transfervorrichtung ausübbar ist. Der Absatz oder die Kante dient zum Ausüben einer Kraft auf die Transfervorrichtung, insbesondere mittels der Pipettiervorrichtung. Die Kraft wird insbesondere von einer Unterseite der Kammstruktur in Richtung ihrer Oberseite ausgeübt. Das Eingriffselement ist insbesondere in Zusammenhang mit einem Einzelplattenträger wichtig, welcher in der Regel keinen Ansatzpunkt zum Einüben einer Kraft aufweist. Eine Krafteinwirkung zum Abdichten der Pipettenspitzen in einem Einzelplattenträger in einer Pipettiervorrichtung erfolgt bevorzugt mittels des Eingriffselements und des Zugriffselements der Transfervorrichtung.

In einer Ausgestaltung weist mindestens eine innere Querstrebe eine größere Länge auf als mindestens eine weitere innere Querstrebe. Mittels der mindestens einen inneren Querstrebe mit der größeren Länge wird erreicht, dass das Einbringen des Pipettenträgers in die Transfervorrichtung, insb. das Einfädeln des Pipettenträgers bzw. der Pipettenspitzen im Pipettenträger zwischen die inneren Querstreben, vereinfacht wird.

In einer Ausgestaltung werden die inneren Querstreben von den äußeren Querstreben zu einer Mitte der Kammstruktur länger.

In einer weiteren Ausgestaltung sind eine oder zwei innere Querstreben in der Mitte der Kammstruktur kürzer als die sie umgebenden Querstreben.

In einer Weiterbildung sind eine oder zwei innere Querstreben länger als die restlichen inneren Querstreben.

In einer weiteren Ausgestaltung sind die inneren Querstreben auf der Unterseite derart abgeschrägt, dass sich eine Höhe der inneren Querstreben von der Längsstrebe zu einem der Längsstrebe abgewandten Ende der inneren Querstreben verkleinert. Mittels der Abschrägung der inneren Querstreben wird eine Geometrieoptimierung der Transfervorrichtung möglich, wenn der Pipettenträger in die Transfervorrichtung eingebracht wird. Insbesondere werden Fehler in den Fertigungstoleranzen des Pipettenträgers mittels der Abschrägung ausgeglichen.

In einer Ausgestaltung sind die inneren Querstreben auf der Unterseite derart abgeschrägt, dass bei einem auf die inneren Querstreben aufgebrachten Krafteintrag die inneren Querstreben maximal so verformt werden, dass die Unterseite der inneren Querstreben sich einer horizontalen Lage annähert oder erreicht.

In einer weiteren Ausgestaltung sind die inneren Querstreben derart abgeschrägt, dass sich die Höhe der inneren Querstreben zwischen 0,05° und 3° verkleinert.

Hinsichtlich des Transfersystems wird die Aufgabe erfindungsgemäß gelöst durch ein Transfersystem umfassend
- einen Pipettenträger, insbesondere einen Doppelplattenträger oder einen Einzelplattenträger, und
- eine Transfervorrichtung nach einer der vorherigen Ausgestaltungen,
wobei der Pipettenträger in die Transfervorrichtung einbringbar ist.

Der Pipettenträger umfasst zumindest eine Platte mit einer Mehrzahl an Durchgangslöchern oder Aussparungen für die Aufnahme von Pipettenspitzen. Die Durchgangslöchern oder Aussparungen können dazu ausgestaltet sein, die Pipettenspitzen aufzunehmen. Der Pipettenträger kann als Doppelplattenträger oder Einzelplattenträger ausgestaltet sein. Der Pipettenträger kann in die Transfervorrichtung eingebracht sein. Der Pipettenträger kann mittels der inneren Querstreben in die Transfervorrichtung eingebracht sein. Insbesondere sind die inneren Querstreben zwischen die Pipettenspitzen im Pipettenträger eingeführt. Der Pipettenträger kann mittels der inneren Querstreben in die Transfervorrichtung eingebracht sein. Insbesondere sind inneren Querstreben zwischen die Pipettenspitzen im Pipettenträger eingeführt. Das Transfersystem kann eine Mehrzahl an Pipettenspitzen umfassen, welche in den Pipettenträger eingebracht sind. Optional kann das Transfersystem neben der Transfervorrichtung ein Trägersystem oder eine Trägeranordnung umfassen.

Eine Ausgestaltung sieht vor, dass der Pipettenträger ein Doppelplattenträger ist und dass ein Abstand zwischen den Stegen derart ausgestaltet ist, dass die Transfervorrichtung mittels der inneren Querstreben zwischen die Stege eingreifen und den Doppelplattenträger aufnehmen kann.

Eine alternative Ausgestaltung sieht vor, dass der Pipettenträger ein Einzelplattenträger ist und dass ein Abstand zwischen den Ausrichtungselementen derart ausgestaltet ist, dass die Transfervorrichtung mittels der inneren Querstreben zwischen die Ausrichtungselemente eingreifen und den Einzelplattenträger aufnehmen kann.

In einer Weiterbildung weist die Transfervorrichtung mindestens ein Halteelement und der Pipettenträger mindestens ein Arretierelement auf, welches korrespondierend zum Halteelement ausgestaltet ist,
wobei der Pipettenträger in die Transfervorrichtung einbringbar und mittels des mindestens einen Arretierelements und des mindestens einen Halteelements in der Transfervorrichtung arretierbar ist. Das mindestens eine Arretierelement kann an der Platte angebracht sein. Der Pipettenträger kann als Doppelplattenträger oder Einzelplattenträger ausgestaltet sein. Das mindestens eine Halteelement und das mindestens eine Arretierelement können derart ausgestaltet sein, dass eine Arretierung des Pipettenträgers und der Transfervorrichtung mittels eines Formschlusses oder einer Verstiftung erreicht wird.

Hinsichtlich des Pipettiersystems wird die Aufgabe erfindungsgemäß gelöst durch ein Pipettiersystem umfassend
- ein Transfersystem nach einer der vorherigen Ausgestaltungen,
- eine Pipettiervorrichtung mit einem Pipettierkopf mit einer Dichtplatte und einer Mehrzahl an Pipettierkanälen zum Ansaugen und Abgeben von Flüssigkeiten in die Pipettenspitzen, wobei die Pipettierkanäle durch die Dichtplatte geführt sind,
wobei das Transfersystem in die Pipettiervorrichtung einbringbar ist, wobei die Pipettiervorrichtung dazu eingerichtet ist, eine Kraft auf die Transfervorrichtung auszuüben, derart dass die in dem Pipettenträger angeordneten Pipettenspitzen gegen die Dichtplatte abgedichtet werden.

Im Weiteren soll die Erfindung anhand der nachfolgenden Figuren Fig. 1 - 33 näher erläutert werden. Sie zeigen:
Fig. 1-3: eine erste Ausgestaltung eines erfindungsgemäßen Doppelplattenträgers.
Fig. 4: eine zweite Ausgestaltung eines erfindungsgemäßen Doppelplattenträgers.
Fig. 5: eine Aufsicht auf die obere Platte eines erfindungsgemäßen Doppelplattenträgers.
Fig. 6: eine Detailansicht von Fig. 5.
Fig. 7-8: eine Ausgestaltung eines erfindungsgemäßen Trägersystems.
Fig. 9: eine Schnittansicht eines erfindungsgemäßen Trägersystems.
Fig. 10: eine weitere Ausgestaltung eines erfindungsgemäßen Doppelplattenträgers.
Fig. 11: eine weitere Ausgestaltung eines erfindungsgemäßen Trägersystems.
Fig. 12-13: eine Ausgestaltung eines erfinderischen Einzelplattenträgers.
Fig. 14-15: zwei weitere Ausgestaltungen eines erfinderischen Einzelplattenträgers.
Fig. 16-17: eine Ausgestaltung einer erfinderischen Trägeranordnung.
Fig. 18: eine erste Ausgestaltung einer erfindungsgemäßen Transfervorrichtung.
Fig. 19: eine zweite Ausgestaltung einer erfindungsgemäßen Transfervorrichtung.
Fig. 20: eine erste Ausgestaltung eines erfindungsgemäßen Transfersystems.
Fig. 21-22: eine dritte Ausgestaltung einer erfindungsgemäßen Transfervorrichtung.
Fig. 23a-c: eine vierte Ausgestaltung einer erfindungsgemäßen Transfervorrichtung.
Fig. 24: eine fünfte Ausgestaltung einer erfindungsgemäßen Transfervorrichtung.
Fig. 25-27: eine Ausgestaltung eines erfindungsgemäßen Transfersystems mit einem Einzelplattenträger.
Fig. 28-29: eine weitere Ausgestaltung eines erfindungsgemäßen Transfersystems mit einem Einzelplattenträger.
Fig. 30-31: eine Ausgestaltung eines erfindungsgemäßen Transfersystems mit einem Doppelplattenträger.
Fig. 32-33: zwei Ausgestaltungen eines erfindungsgemäßen Pipettiersystems.

Die in den Figuren beschriebenen Ausgestaltungen der verschiedenen Vorrichtungen sind für die jeweilige Vorrichtung beliebig untereinander kombinierbar. Dies gilt insbesondere für die Beispiele der erfindungsgemäßen Transfervorrichtung, deren zahlreiche Ausgestaltungen anhand mehrerer Figuren dargestellt ist und deren Ausgestaltungen sich beliebig kombinieren lassen.

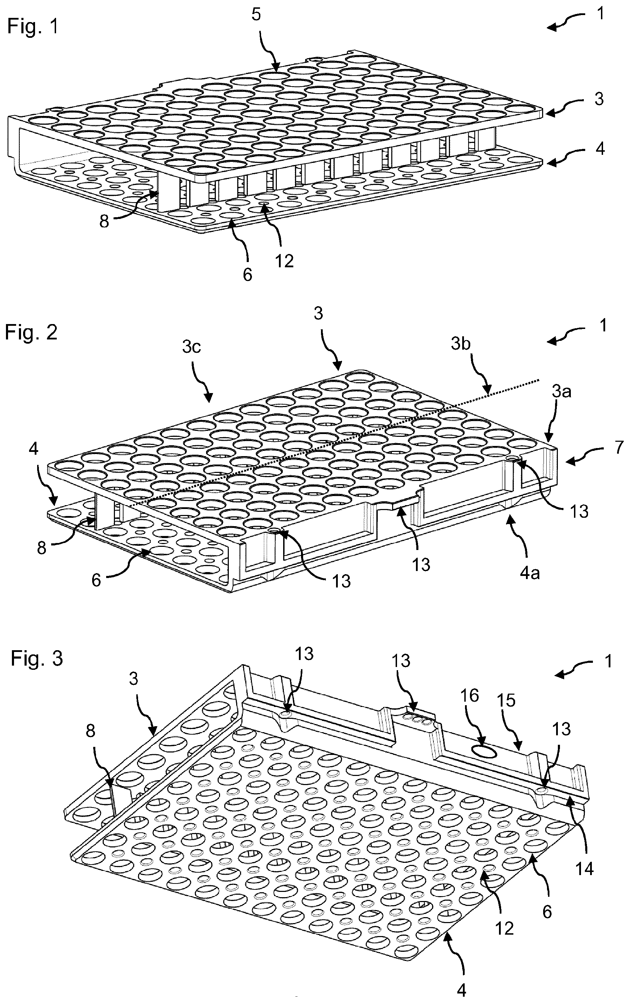

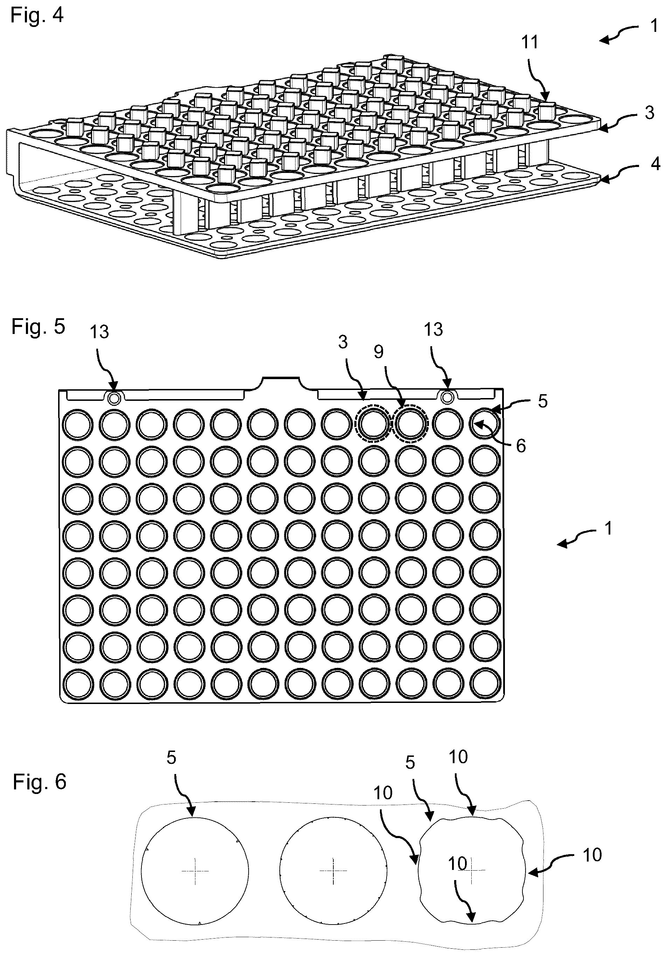

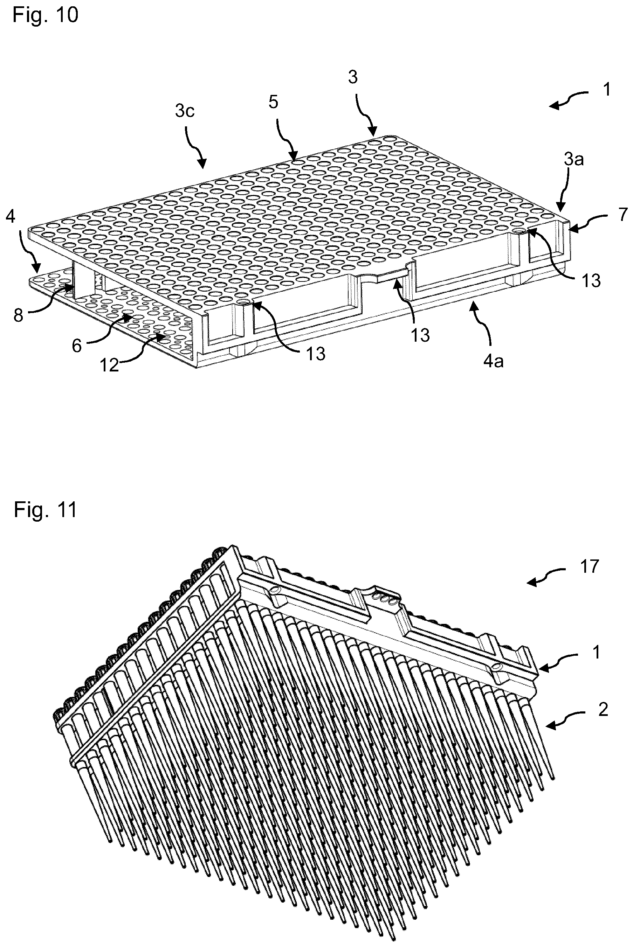

In den Figuren Fig. 1-3 ist ein beispielhafter Doppelplattenträger 1 in unterschiedlichen Ansichten dargestellt. Der Doppelplattenträger 1 weist eine obere Platte 3 und eine untere Platte 4 auf, welche im Wesentlichen parallel zueinander angeordnet sind und insbesondere biegesteif ausgestaltet sind. Die obere Platte 3 weist eine Mehrzahl an ersten Durchgangslöchern 5 und die untere Platte 4 weist eine Mehrzahl an zweiten Durchgangslöchern 6 auf. Die ersten Durchgangslöcher 5 und die zweiten Durchgangslöcher 6 sind derart ausgestaltet und angeordnet, dass sie miteinander fluchten. Insbesondere fluchten die ersten Durchgangslöcher 5 und die zweiten Durchgangslöcher 6 derart miteinander, dass ein jeweiliger Mittelpunkt eines ersten Durchgangslochs 5 und ein Mittelpunkt eines damit fluchtenden zweiten Durchgangslochs 6 auf einer gemeinsamen Querachse 1a des Doppelplattenträger angeordnet ist. Im Sinne der Anmeldung heißt eine Mehrzahl einer Komponente, dass zwei oder mehr Komponenten vorliegen. Bevorzugt liegen die ersten Durchgangslöcher 5 in derselben Anzahl wie die zweiten Durchgangslöcher 6 vor. Die Anzahl der ersten Durchgangslöcher 5 sowie der zweiten Durchgangslöcher 6 kann auf die Anzahl typischer Formate von Mikrotiterplatten abgestimmt sein und dem gängigen ANSI-SLAS-Standard folgen. Beispielsweise kann der Doppelplattenträger 96 oder 384 erste Durchgangslöcher 5 bzw. zweite Durchgangslöcher 6 aufweisen. Eine alternative Ausführungsform des Doppelplattenträgers 1 und insbesondere der Durchmesser der ersten Durchgangslöcher 5 und der zweiten Durchgangslöcher 6 ist in Fig. 10 gezeigt. Die ersten Durchgangslöcher 5 und die zweiten Durchgangslöcher 6 können kreisförmig ausgestaltet sein, aber auch andere Formen aufweisen, wie beispielsweise in Fig. 6 gezeigt. Die Durchmesser der ersten Durchgangslöcher 5 und zweiten Durchgangslöcher 6 können identisch sein; in der Regel weichen die Durchmesser der ersten Durchgangslöcher 5 und der zweiten Durchgangslöcher 6 voneinander ab, so dass ein Durchmesser der ersten Durchgangslöcher 5 größer ist als ein Durchmesser der zweiten Durchgangslöcher 6. Dies folgt der gängigen Ausgestaltung von Pipettenspitzen, welche sich vom Bund 2c zum distalen Endbereich 2a verjüngen. Die obere Platte 3 und die untere Platte 4 sind mittels einer Seitenwand 7 miteinander verbunden, welche jeweils an einer ersten Längsseite 3a, 4a der oberen Platte 3 und der unteren Platte 4 angeordnet ist. Die Seitenwand 7 kann sich über die gesamte Länge der ersten Längsseiten 3a, 3b erstrecken oder nur über einen oder mehrere Abschnitte der ersten Längsseiten 3a, 3b.

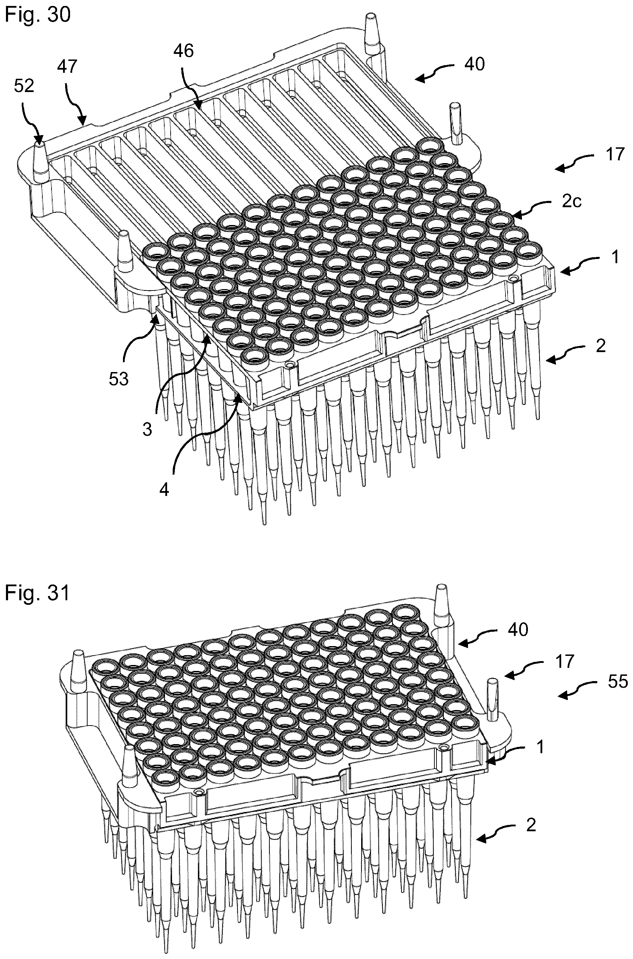

Um die Stabilität des Doppelplattenträgers 1 zu gewährleisten, sind ferner eine Mehrzahl an Stegen 8 vorgesehen, welche zwischen der oberen Platte 3 und der unteren Platte 4 angeordnet sind und die obere Platte 3 und die untere Platte 4 miteinander verbinden. Die Stege 8 können zylindrisch, quaderförmig oder konisch ausgeführt sein, wobei auch weitere Ausgestaltungen denkbar sind. Die Stege 8 können zwischen einer Mitte 3b der oberen Platte 3 und einer zweiten Längsseite 3c oberen Platte 3, welche der ersten Längsseite 3a gegenüberliegt, angeordnet sein. Die Stege 8 können in symmetrischen oder asymmetrischen Mustern zwischen der oberen Platte 3 und der unteren Platte 4 angeordnet sein. Insbesondere können die Stege 8 äquidistant zueinander und/oder auf einer Achse parallel zu der ersten Längsseite 3a der oberen Platte 3 angeordnet sein. Ein Abstand zwischen den Stegen 8 kann derart ausgestaltet sein, dass, insbesondere nach dem Bestücken des Doppelplattenträgers 1 mit Pipettenspitzen 2, eine Transfervorrichtung 40 zwischen die Stege 8, und insbesondere zwischen die Pipettenspitzen 2, eingreifen und den Doppelplattenträger 1 aufnehmen kann (vgl. Fig. 30-31).

Für eine leichte und materialreduzierte Ausführung des Doppelplattenträgers 1 kann eine Mehrzahl an Materialschwächern 12 auf der unteren Platte 4 und/oder der oberen Platte 3 angeordnet sein. Die Materialschwächer 12 sind insbesondere dazu ausgestaltet, das Material der unteren Platte 4 und/oder der oberen Platte 3 zu reduzieren. Die Materialschwächer 12 können beispielsweise als Ausnehmungen, Löcher oder Öffnungen ausgestaltet sein. Dabei sind die Materialschwächer 12 zwischen den zweiten Durchgangslöchern 6 bzw. den ersten Durchgangslöchern 5 angeordnet. Insbesondere fluchten die Materialschwächer 12 nicht mit den ersten Durchgangslöchern 5 bzw. den zweiten Durchgangslöchern 6. In den Beispielen von Fig. 1-4 sind die Materialschwächer 12 als dritte Durchgangslöcher auf der unteren Platte 4 ausgeführt.

Die Seitenwand 7 kann neben der Verbindung der oberen Platte 3 mit der unteren Platte 4 weitere Funktionen aufweisen. So kann die Seitenwand 7 ein oder mehrere Greifelemente 13 aufweisen, welche auf einer den Stegen 8 abgewandten Fläche der Seitenwand 7 angeordnet und derart ausgestaltet sind, dass der Doppelplattenträger 1 mittels des einen oder der mehreren Greifelemente 13 automatisiert aufnehmbar ist. Insbesondere sind das eine oder die mehreren Greifelemente 13 als Objektaufnahmen ausgestaltet. In den Figuren Fig. 2-3 sind beispielhaft drei Greifelemente 13 gezeigt, wobei das mittlere Greifelement eine flache Platte und die beiden äußeren Greifelemente als Öffnungen ausgestaltete Objektaufnahmen sind. Derartige Greifelemente 13 lassen sich mit herkömmlichen Robotern, insbesondere kartesischen Robotern, auf einfache Weise greifen, so dass der Doppelplattenträger 1 mittels der Greifelemente 13 automatisiert aufnehmbar und transportierbar ist.

Die Seitenwand 7 kann ferner einen Codierbereich 15 mit zumindest einem Codierelement 16 aufweisen, anhand welchem der Doppelplattenträger 1 identifizierbar ist. Beispielsweise lässt sich mittels des zumindest einem Codierelement 16 erkennen, wie viele erste bzw. zweite Durchganglöcher 5,6 der Doppelplattenträger 1 aufweist. Das zumindest eine Codierelement 16 kann beispielsweise ein QR-Code, ein Barcode, ein RFID-Tag oder eine sonstige Beschriftung sein. Die Seitenwand 7 kann zudem mindestens ein Krafteintragselement 14, wie bspw. eine Kante, einen Vorsprung, einen Absatz und/oder eine Fläche aufweisen, mittels welcher Kraft auf den Doppelplattenträger 1 ausübbar ist. Die Kraft wird insbesondere durch eine Pipettiervorrichtung ausgeübt, nachdem der Doppelplattenträger 1 in die Pipettiervorrichtung eingebracht wurde. Die Kraft kann dazu dienen, den Doppelplattenträger 1 gegen eine Dichtplatte der Pipettiervorrichtung zu drücken, um die Pipettenspitzen 2 gegen die Dichtplatte abzudichten. Die Kraft wird insbesondere in einer Richtung von der unteren Platte 4 zu der oberen Platte 3 auf das Krafteintragselement 14 ausgeübt.

Um ein Verkippen des Doppelplattenträgers 1 in einer Pipettiervorrichtung 42 bei unvollständiger Bestückung mit Pipettenspitzen 2 zu vermeiden, kann auf einer der unteren Platte 4 abgewandten Fläche der oberen Platte 3 mindestens ein Abstandshalter 11 angeordnet sein. Der mindestens eine Abstandshalter 11 kann zylindrisch, konisch oder quaderförmig ausgestaltet sein. Bevorzugt weist die obere Platte 3 eine Mehrzahl an Abstandshaltern 11 auf, wie beispielhaft in Fig. 4 gezeigt.

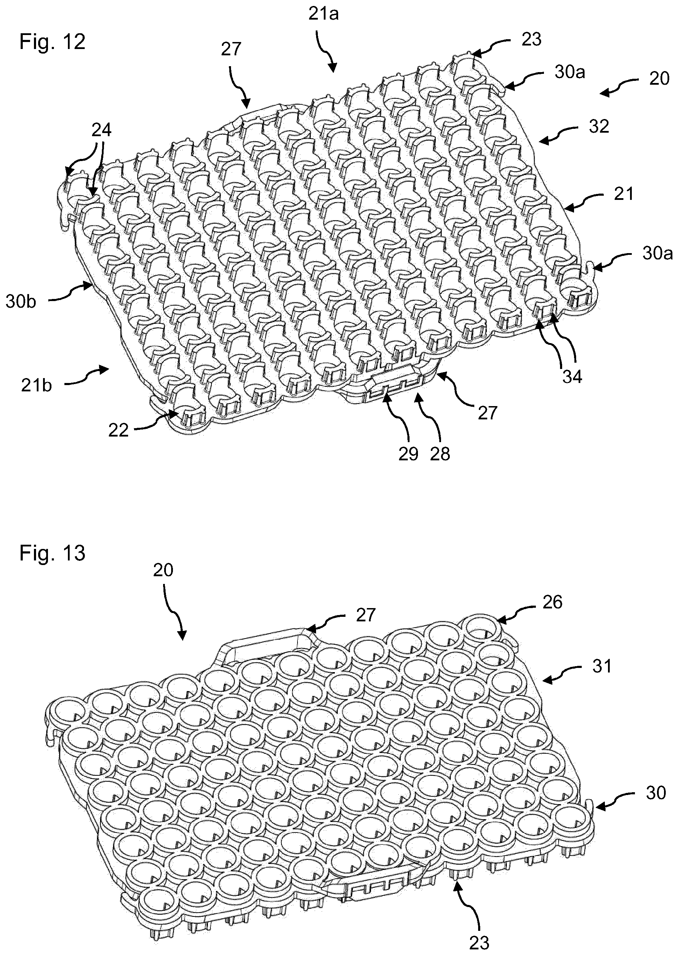

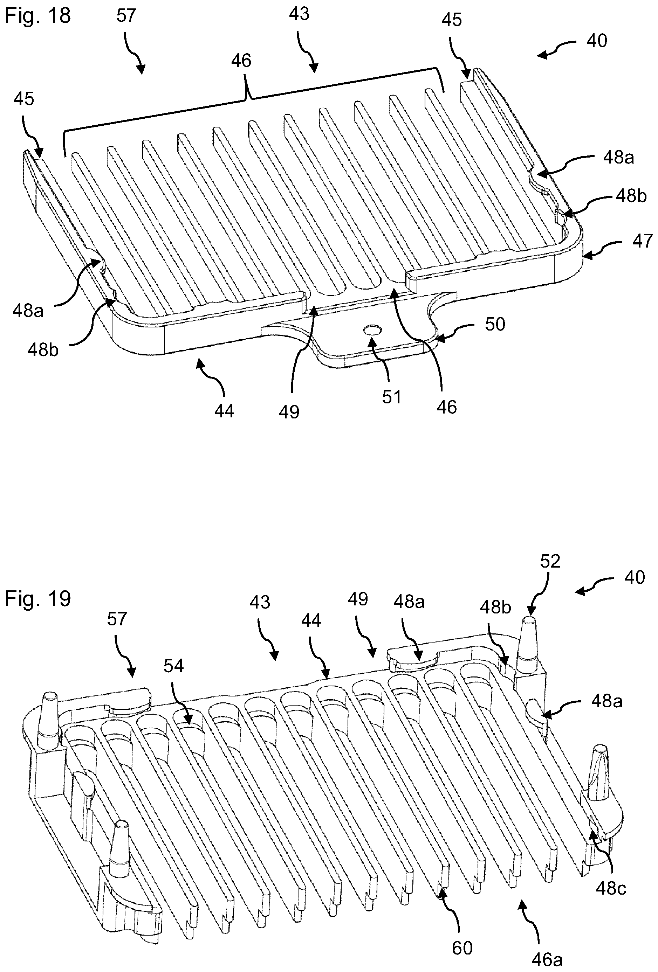

Fig. 5 zeigt eine Aufsicht auf eine obere Platte 3 eines erfindungsgemäßen Doppelplattenträgers 1. Innerhalb der ersten Durchgangslöcher 5 sind die zweiten Durchgangslöcher 6 in der unteren Platte 4 zu sehen, welche in diesem Beispiel einen kleineren Durchmesser aufweisen als die ersten Durchgangslöcher 5. Die ersten Durchgangslöcher 5 können derart ausgestaltet sein, dass eine Umrandung 9 (gestrichelt dargestellt) der ersten Durchgangslöcher 5 als Auflagefläche für jeweils einen Bund 2c einer eingebrachten Pipettenspitze 2 dient. Alternativ kann die obere Platte 3 eine Mehrzahl an Auflageelementen aufweisen, welche als Auflagefläche für einen Bund 2c der Pipettenspitzen 2 dienen. Ein Beispiel für eine solche Auflagefläche 26 ist am Beispiel des Einzelplattenträgers 20 in Fig. 13 gezeigt und kann auch beim Doppelplattenträger 1 zum Einsatz kommen. Die ersten Durchgangslöcher 5 und/oder die zweiten Durchgangslöcher 6 können kreisförmig ausgestaltet sein oder zumindest zwei Radiensegmente 10 aufweisen. In Fig. 6 ist diese Ausgestaltung im Detail gezeigt. Bevorzugt weisen die ersten Durchgangslöcher 5 und/oder die zweiten Durchgangslöcher 6 zwei oder vier Radiensegmente 10 auf. Insbesondere sind die ersten Durchgangslöcher 5 und die zweiten Durchgangslöcher 6 derart ausgestaltet, dass in die ersten Durchgangslöcher 5 und die zweiten Durchgangslöcher 6 eingebrachte Pipettenspitzen in den ersten Durchgangslöcher 5 und zweiten Durchgangslöcher 6 in einer vorgegebenen Position gehalten werden. An der oberen Platte 3 und/oder der unteren Platte 4 kann mindestens ein Arretierelement 30 angeordnet sein. Beispiele für solche Arretierelemente finden sich in Fig. 12 am Beispiel des Einzelplattenträgers 20; die dort gezeigten Arretierelemente 30 sind auf den Doppelplattenträger 1 übertragbar. Bevorzugt ist das mindestens eine Arretierelement 30 an der oberen Platte 3 angeordnet, insbesondere an einer Querseite der oberen Platte 3. Auf diese Weise angeordnet kann das mindestens eine Arretierelement mit mindestens einem Halteelement 48 der Transfervorrichtung, wie bspw. in Fig. 18 oder Fig. 19 gezeigt, arretieren.

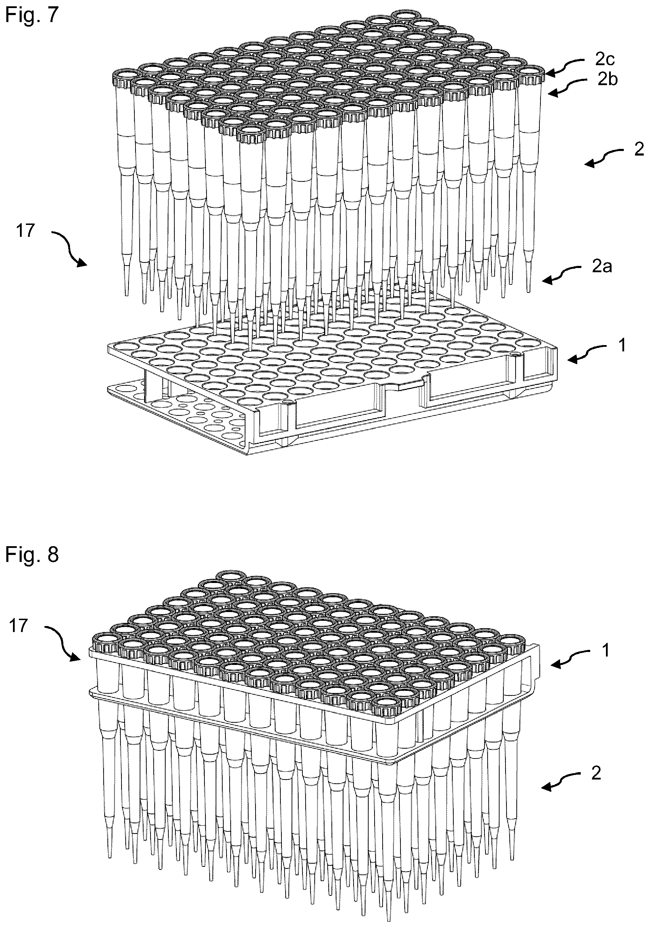

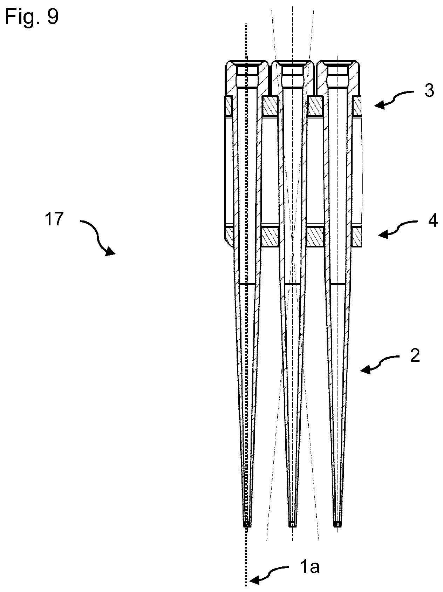

In den Figuren Fig. 7-9 ist ein erfindungsgemäßes Trägersystem 17 gezeigt. Das Trägersystem 17 umfasst einen Doppelplattenträger 1 und eine Mehrzahl an Pipettenspitzen 2 mit einem proximalen Ende 2a, einem Bund 2b und einem distalen Ende 2c, welche in ersten Durchgangslöcher 5 und die zweiten Durchgangslöcher 6 eingebracht sind, wie in Fig. 8 gezeigt. Fig. 7 zeigt das Trägersystem 17 in Explosivdarstellung. Fig. 9 zeigt einen Querschnitt durch das Trägersystem 17. Die ersten Durchgangslöcher 5 und die zweiten Durchgangslöcher 6 können derart ausgestaltet sein, dass die eingebrachten Pipettenspitzen 2 entlang einer Querachse 1a des Doppelplattenträgers 1 ausgerichtet werden. Die Querachse 1a des Doppelplattenträgers 1 ist insbesondere quer zur ersten Längsseite 3a, 3b der oberen Platte 3 bzw. der unteren Platte 4 angeordnet. Die Anzahl der Pipettenspitzen 2 kann der Anzahl der ersten Durchgangslöcher 5 entsprechen oder kleiner sein.

Fig. 10 zeigt eine weitere Ausgestaltung eines Doppelplattenträgers 1. Die ersten Durchgangslöcher 5 und die zweiten Durchgangslöcher 6 sind in dieser Variante kleiner bemessen als in den vorherigen Ausgestaltungen. Entsprechend kann der Doppelplattenträger 1 deutlich mehr Pipettenspitzen 2 aufnehmen. Fig. 11 zeigt eine weitere Ausgestaltung des erfindungsgemäßen Trägersystems 17 mit dem Doppelplattenträger 1 aus Fig. 10.

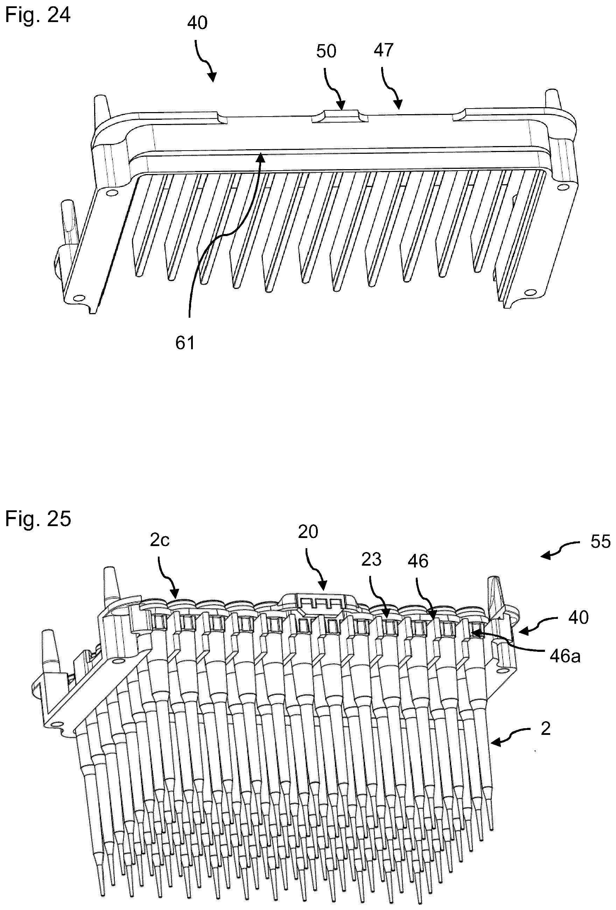

In den Figuren Fig. 12 und 13 ist ein erfindungsgemäßer Einzelplattenträger 20 schematisch dargestellt. Der Einzelplattenträger 20 umfasst eine Platte 21 mit einer Oberseite 31, einer Unterseite 32 und einer Mehrzahl an Aussparungen 22. Fig. 12 zeigt eine Ansicht von der Unterseite 32, während Fig. 13 eine Ansicht der Oberseite 31 darstellt. Die Platte 21 ist insbesondere biegesteif ausgestaltet. Die Aussparungen 22 sind insbesondere Durchgangslöcher. Die Aussparungen 22 können dazu ausgestaltet sein, jeweils eine Pipettenspitze 2 aufzunehmen. Die Anzahl der Aussparungen 22 kann auf die Anzahl typischer Formate von Mikrotiterplatten abgestimmt sein und dem gängigen ANSI-SLAS-Standard folgen. Beispielsweise kann der Einzelplattenträger 96 oder 384 Aussparungen 22 aufweisen. An der Unterseite 32 der Platte 21 ist eine Mehrzahl von Ausrichtungselementen 23 angeordnet, welche die Aussparungen 22 zumindest abschnittsweise umgeben. Die Ausrichtungselemente 23 können die Aussparungen 22 insbesondere entlang eines Umfangs oder eines Rands der Aussparungen 22 zumindest abschnittsweise umgeben. Die Ausrichtungselemente 23 sind insbesondere dazu ausgestaltet, die in die Aussparungen 22 eingebrachten Pipettenspitzen 2 entlang einer Querachse 20a des Einzelplattenträgers 20 auszurichten. Die Querachse 20a des Einzelplattenträgers 20 ist insbesondere quer zur Platte 21 angeordnet. Die Aussparungen 22 und/oder die Ausrichtungselemente 23 können zylindrisch oder konisch ausgestaltet sein oder zumindest zwei Radiensegmente 24 aufweisen. Die zumindest zwei Radiensegmente 24 können punkt- oder spiegelsymmetrisch angeordnet sein. Im Beispiel der Fig. 12 sind die Ausrichtungselemente 23 jeweils in Form von zwei Radiensegmenten 24 ausgestaltet. Es wäre auch möglich, beispielsweise drei, vier oder mehr Radiensegmente als Ausrichtungselemente 23 zu verwenden. Mögliche Ausgestaltungen für die Aussparungen 22 sind der Fig. 6 zu entnehmen; in der Fig. 6 entsprechen die ersten Durchgangslöcher 5 dann den Aussparungen 22. An einer den Aussparungen 22 abgewandten Fläche der Ausrichtungselemente 23 können Verstärkungselemente 34 wie bspw. Stege angeordnet sein. Ein Abstand zwischen den Ausrichtungselementen 23 kann derart ausgestaltet sein, dass, insbesondere nach Bestücken des Einzelplattenträgers 20 mit Pipettenspitzen 2, eine Transfervorrichtung 40 zwischen die Ausrichtungselemente, und insbesondere zwischen die Pipettenspitzen 2, eingreifen und den Einzelplattenträger 20 aufnehmen kann (vgl. Fig. 25-27).

Auf der Oberseite 31 kann ferner eine Mehrzahl von Auflageelementen 26 angeordnet sein, welche als Auflageflächen für jeweils einen Bund 2c einer in die Aussparungen 22 eingebrachten Pipettenspitzen 2 dienen. Die Auflageelemente 26 können zylindrisch ausgestaltet sein oder zumindest zwei, insbesondere punkt- oder spiegelsymmetrisch angeordnete, Radiensegmente 24 aufweisen. Mittels der Auflageelemente 26 wird vermieden, dass die Pipettenspitzen 2 direkt auf der Platte aufliegen, die dann stärker ausgeführt sein müsste. Die Auflageelemente 26 umgeben insbesondere die Aussparungen 22 zumindest teilweise.

Der Einzelplattenträger 20 kann zumindest einen Griff 27 aufweisen, welcher insbesondere an einer Längsseite 21a der Platte 21 angeordnet ist. Bevorzugt weist der Einzelplattenträger 20 zwei Griffe auf, welche jeweils an einer Längsseite der Platte 21 angeordnet sind, wie in Fig. 12 dargestellt. Der zumindest eine Griff 27 kann einen Identifizierungsbereich 28 mit zumindest einem Identifizierungselement 29 aufweisen, anhand welcher der Einzelplattenträger 20 identifizierbar ist. Das zumindest eine Identifizierungselement 29 kann beispielsweise ein QR-Code, ein Barcode, ein RFID-Tag oder eine sonstige Beschriftung sein.

Die Platte 21 kann mindestens ein Arretierelement 30 aufweisen, welches insbesondere an einer Querseite 21b der Platte 21 angeordnet ist. Das mindestens eine Arretierelement 30 dient zur Arretierung des Einzelplattenträgers 20 in einer Transfervorrichtung 40 in zumindest einer Achse. Das mindestens eine Arretierelement 30 kann als eine Rastnase, eine Ausbuchtung, eine Ausnehmung und/oder ein Absatz ausgestaltet sein. In den Figuren Fig. 12 und 13 sind zwei verschiedene Arretierelemente 30 gezeigt. So ist jeweils in einem Endbereich der Querseite 21b der Platte 21 eine Rastnase 30a angeordnet und in der Mitte der Querseite 21b eine Ausbuchtung 30b. Die beiden Rastnasen 30a dienen insbesondere zur Arretierung des Einzelplattenträgers 20 in der Ebene der Platte 21, während die Ausbuchtung 30b zur Arretierung des Einzelplattenträgers 20 quer zur Platte 21 dient.

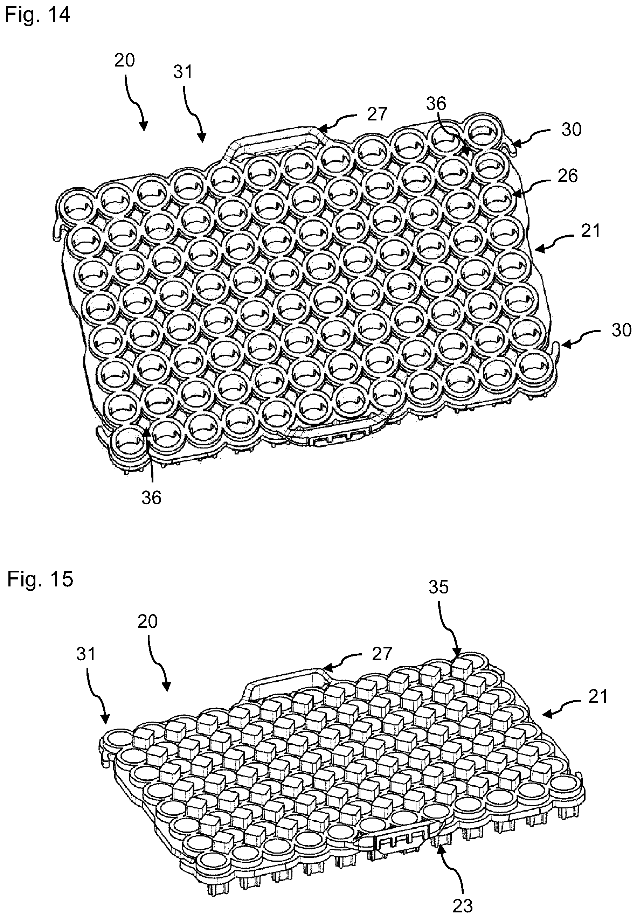

Die Figuren Fig. 14 und 15 zeigen zwei weitere Ausgestaltungen des erfindungsgemäßen Einzelplattenträgers 20. Wie in Fig. 14 dargestellt, kann der Einzelplattenträger 20 eine Mehrzahl an Materialreduzierern 36 auf der Platte 21 aufweisen. Diese sind zwischen den Aussparungen 22 angeordnet. Wie in Fig. 15 dargestellt, kann der Einzelplatteträger 20 mindestens einen Abstandshalter 35 auf der Oberseite der Platte 21 aufweisen. Der mindestens eine Abstandshalter 35 ist insbesondere zwischen den Aussparungen 22 angeordnet.

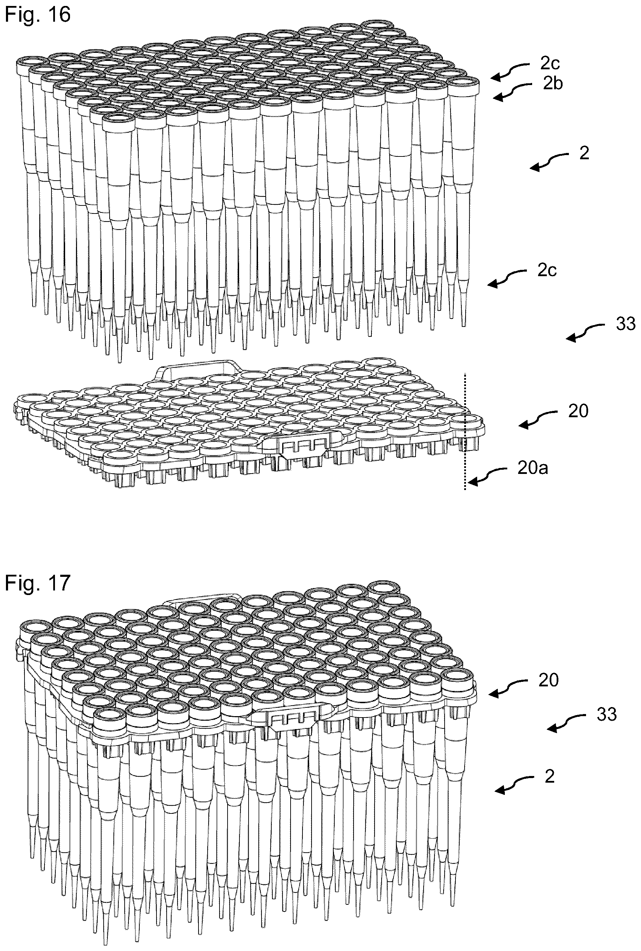

Die beiden Figuren Fig. 16 und 17 zeigen eine erfindungsgemäße Trägeranordnung 33 umfassend einen Einzelplattenträger 20 und eine Mehrzahl an Pipettenspitzen 2, welche in die Aussparungen 22 eingebracht sind. In Fig. 16 ist die Trägeranordnung 33 in Explosivdarstellung gezeigt. Die Ausrichtungselemente 23 können dazu ausgestaltet sein, die Pipettenspitzen 2 in den Aussparungen 22, insbesondere entlang einer Querachse 20a des Einzelplattenträgers 20, auszurichten. Die Anzahl der Pipettenspitzen 2 kann der Anzahl der Aussparungen 22 entsprechen oder kleiner sein.

Fig. 18 zeigt eine erste Ausgestaltung einer erfindungsgemäßen Transfervorrichtung 40. Die Transfervorrichtung 40 umfasst eine Kammstruktur 43 mit einer Längsstrebe 44 und einer Mehrzahl an rechtwinklig dazu angeordneten Querstreben 45, 46, welche parallel und äquidistant zueinander angeordnet sind. Die Querstreben 45, 46 umfassen zwei äußere Querstreben 45, welche zusammen mit der Längsstrebe 44 in Form eines dreiseitigen Rahmens 47 ausgebildet sind. Zwischen den äußeren Querstreben 45 sind mehrere innere Querstreben 46 angeordnet. Die inneren Querstreben 46 können dazu dienen, einen Pipettenträger 41 aufzunehmen. Die Kammstruktur 43 kann eine Oberseite 57 und eine Unterseite 58 aufweisen. Zudem kann die Transfervorrichtung 40 mindestens ein am Rahmen 47 angeordnetes Halteelement 48 aufweisen, welches derart ausgestaltet ist, dass der Pipettenträger 41 in mindestens einer Achse in der Transfervorrichtung 40 arretierbar ist. Das mindestens eine Halteelement 48 ist insbesondere als ein Überhang, eine Ausnehmung, ein Vorsprung und/oder eine Ausbuchtung ausgestaltet. In Fig. 18 sind beispielhaft zwei Arten von Halteelementen 48 gezeigt: ein Überhang 48a und eine Ausbuchtung 48b. Der Überhand 48a dient dazu, den Pipettenträger 41 in einer Achse quer zum Rahmen 47 in der Transfervorrichtung 40 zu arretieren. Die Ausbuchtung 48b dient zur Arretierung des Pipettenträgers 41 in der Ebene des Rahmens 47. Das mindestens eine Halteelement 48 kann als Radiensegment oder Kreissegment ausgestaltet sein. Beispielsweise ist der Überhang 48b als Kreissegment ausgestaltet. Alternativ kann das mindestens eine Halteelement 48 eine Feder, einen Magneten und/oder ein Drehelement aufweisen. In Fig. 19 ist ein Halteelement 48, welches als Radiensegment 48c ausgestaltet ist, gezeigt.

Die Transfervorrichtung 40 kann einen an der Längsstrebe 44 angeordneten Haltegriff 50 aufweisen, welcher insbesondere ein Zentrierelement 51 aufweist, welches derart ausgestaltet ist, dass die Transfervorrichtung 40 automatisiert bewegt werden kann. In Fig. 18 ist das Zentrierelement 51 beispielhaft als eine Öffnung ausgestaltet. Mittels des Zentrierelements 51 kann ein Roboter die Transfervorrichtung 40 greifen und bewegen. Auch ein Bediener kann die Transfervorrichtung 40 mittels des Haltegriffs 50 aufnehmen und transportieren.

Der Rahmen 47 kann im Bereich der Längsstrebe 44 eine Rahmenaussparung 49 aufweisen, welche insbesondere mittig auf der Längsstrebe 44 angeordnet ist. Die Rahmenaussparung 49 kann derart ausgestaltet sein, dass durch die Rahmenaussparung 49 der Rahmen 47 auf eine Höhe des Haltegriffs 50 abgesenkt ist. Der Rahmen kann weiterhin mindestens eine Anschlagfläche 54 aufweisen, welche zumindest entlang der Längsstrebe 44 angeordnet ist, und welche auf derselben Höhe des Rahmens 47 wie die Oberseite der inneren Querstreben 46 oder zwischen den Querstreben 45, 46 angeordnet ist. Die Anschlagfläche 54 dient zur Aufnahme des Pipettenträgers 41. Die Anschlagfläche 54 kann entlang des Rahmens 47 angeordnet sein. Dabei kann die Anschlagfläche 54 den Pipettenträger 41 beim Einbringen in die Transfervorrichtung 40 führen.

Die inneren Querstreben 46 können an einem der Längsstrebe abgewandten Ende 46a ein Eingriffselement 60, insbesondere eine Kante oder einen Absatz, aufweisen. Das Eingriffselement 60 kann zum Ausüben einer Kraft auf die Transfervorrichtung 40, insbesondere mittels der Pipettiervorrichtung 42, verwendet werden. Die Kraft wird insbesondere in Richtung von der Unterseite 58 zur Oberseite 57 der inneren Querstreben 46 ausgeübt. In Fig. 19 ist das Eingriffselement 60 als ein Absatz ausgestaltet.

Die Transfervorrichtung 40 ist insbesondere für Pipettiervorrichtungen 42 geeignet, welche derart ausgestaltet sind, dass die Transfervorrichtung 40 horizontal in die Pipettiervorrichtung 42 eingebracht, insbesondere hineingeschoben, wird. Alternative Pipettiervorrichtungen sind solchermaßen ausgestaltet, dass die Transfervorrichtung 40 vertikal von der Oberseite 57 der Kammstruktur 43 aufgenommen wird. Hierfür kann die Transfervorrichtung 40 mindestens zwei Orientierungselemente 52 aufweisen, wie in Fig. 19 gezeigt, welche derart ausgestaltet sind, dass die Transfervorrichtung 40 automatisiert in die Pipettiervorrichtung 42 einbringbar ist. Die Pipettiervorrichtung 42 kann einen Pipettierkopf 72 aufweisen, der entlang der z-Achse verfahrbar ist und so auf Höhe der Transfervorrichtung 40 abgesenkt werden und die Transfervorrichtung 40 aufnehmen kann. Die mindestens zwei Orientierungselemente 52 dienen dabei zur Führung des Pipettierkopfs 72.

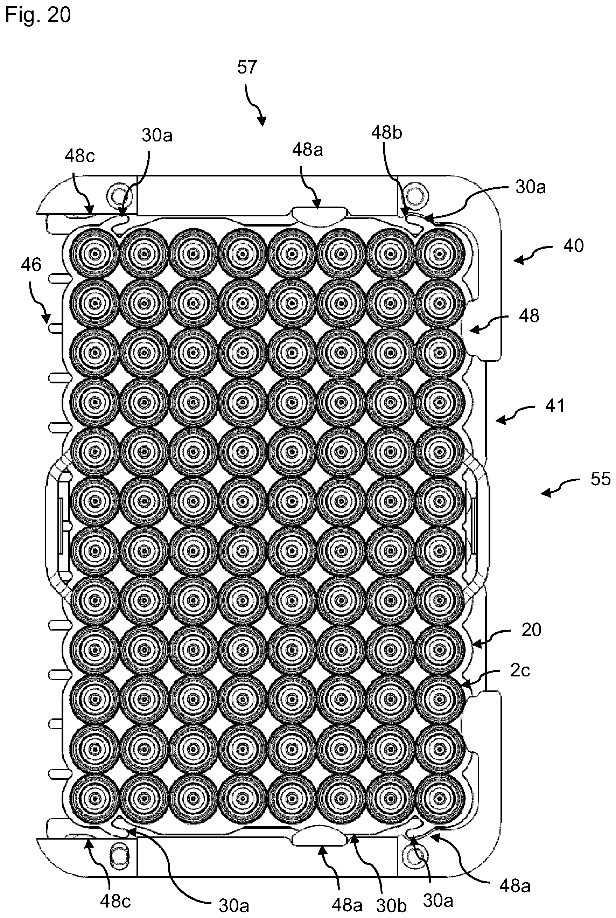

In Fig. 20 ist eine Ausgestaltung eines erfindungsgemäßen Transfersystems 55 mit einer Transfervorrichtung 40 und einem Pipettenträger 41 in einer Aufsicht auf die Oberseite 57 der Kammstruktur 43 dargestellt. Das Transfersystem 55 kann eine Mehrzahl an Pipettenspitzen 2 umfassen, welche in den Pipettenträger 41 eingebracht sind. Der in Fig. 20 gezeigte Pipettenträger 41 ist ein Einzelplattenträger 20; es könnte aber auch ein Doppelplattenträger 1 oder ein beliebig anderer Pipettenträger 41 zum Einsatz kommen. Der Pipettenträger 41 kann mindestens ein Arretierelement 30 aufweisen; die Transfervorrichtung kann mindestens ein Halteelement 48 aufweisen. Das mindestens eine Halteelement 48 und das mindestens eine Arretierelement 30 können derart ausgestaltet sein, dass eine Arretierung des Pipettenträgers 41 und der Transfervorrichtung 40 mittels eines Formschlusses oder einer Verstiftung erreicht wird. Der Pipettenträger 41 kann in mindestens einer Achse in der Transfervorrichtung 40 arretiert werden, indem ein Halteelement 48 der Transfervorrichtung 40 mit einem Arretierelement 30 des Pipettenträgers 41 greift. Im gezeigten Beispiel greifen zwei Rastnasen 30a des Pipettenträgers 41 mit je einer Ausbuchtung 48b der Transfervorrichtung 40, um eine Bewegung des Pipettenträgers 41, um eine Bewegung des Pipettenträgers 41 entlang der Längsstrebe 44 zu verhindern. Zwei weitere Rastnasen 30a greifen mit zwei Radiensegmenten 48c, um eine Bewegung des Pipettenträgers 41 entlang der Querstreben 45,46 zu verhindern. Weiterhin greifen zwei Überhänge 48a mit je einer Ausbuchtung 30b, um eine Bewegung des Pipettenträgers 41 quer zur Oberseite 57 zu verhindern.

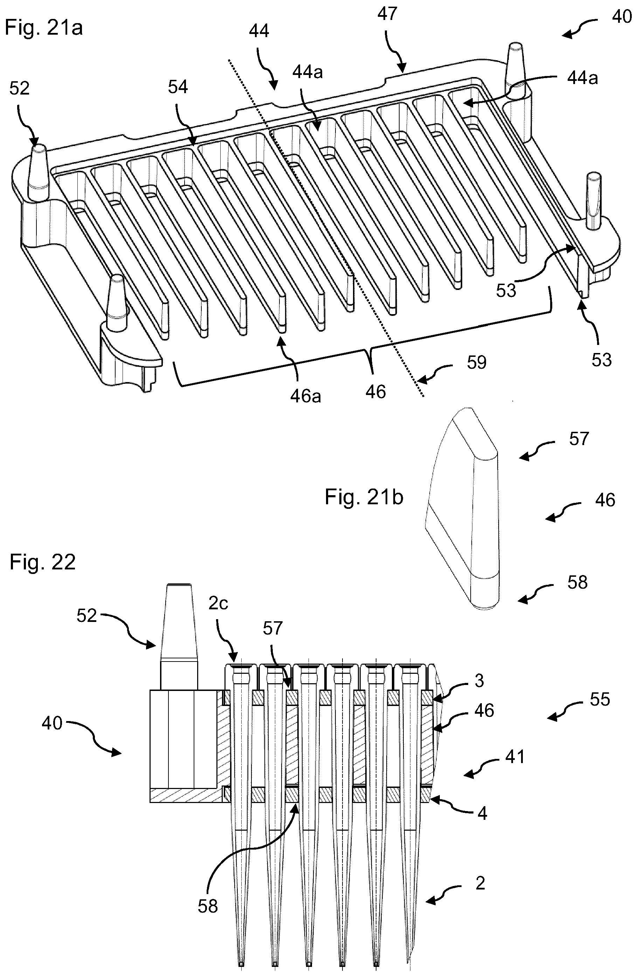

In den Figuren Fig. 21-22 ist eine weitere Ausgestaltung der erfindungsgemäßen Transfervorrichtung 40 gezeigt. Die inneren Querstreben 46 können einen sich in Richtung der Oberseite 57 verjüngenden konischen Querschnitt aufweisen, um eine Kraftübertragung von der Pipettiervorrichtung 42 auf die Transfervorrichtung 40 zu verbessern. Die inneren Querstreben 46 können somit an der Unterseite 58 eine größere Breite aufweisen als an der Oberseite 57. Der sich verjüngende konische Querschnitt einer inneren Querstrebe 46 ist im Detail in Fig. 21b dargestellt. Der sich verjünge konische Querschnitt kann in Form eines Trapezes ausgestaltet sein. Der konische Querschnitt kann derart ausgestaltet sein, dass der konische Querschnitt und ein Außendurchmesser der Pipettenspitzen 2 über die ganze Höhe der inneren Querstreben 46 aneinander angepasst sind.

Die inneren Querstreben 46 können derart ausgestaltet sein, dass mindestens eine innere Querstrebe 46 eine größere Länge aufweist als mindestens eine weitere innere Querstrebe 46. Dies erleichtert die Aufnahme des Pipettenträgers 41 in die Transfervorrichtung 40, da der Pipettenträger 41 zunächst an der mindestens einen inneren Querstrebe 46 mit der größeren Länge eingefädelt und solchermaßen geführt, auf einfache Weise zwischen die restlichen inneren Querstreben 46 gefädelt werden kann. Insbesondere können die inneren Querstreben 46 von den äußeren Querstreben 45 zu einer Mitte 59 der Kammstruktur 43 länger werden. Eine weitere Möglichkeit ist, dass eine oder zwei innere Querstreben 46 in der Mitte 59 der Kammstruktur 43 kürzer sind als die sie umgebenden Querstreben 46. Eine oder zwei innere Querstreben 46 können länger sein als die restlichen inneren Querstreben 46.

Als Länge der inneren Querstreben 46 kann ein Abstand zwischen einer Fläche 44a der Längsstrebe 44, an welcher die inneren Querstreben 46 angeordnet sind, zu einem der Längsstrebe 44 gegenüberliegenden Ende 46a der inneren Querstreben 46 betrachtet werden. Die Fläche 44a der Längsstrebe 44, an welcher die inneren Querstreben 46 angeordnet sind, ist dabei plan, insbesondere so dass die Aufhängepunkte der inneren Querstreben 46 an der Längsstrebe 44 auf einer gemeinsamen Achse liegen.

Wie bereits ausgeführt, kann mindestens eine Anschlagfläche 54 vorgesehen sein, um den Pipettenträger 41 beim Einbringen in die Transfervorrichtung 40 zu führen. Der Rahmen 47 kann ferner mindestens eine umlaufende Führungsnut 53 aufweisen. Die Führungsnut 53 kann das Aufnehmen des Pipettenträgers 41 ebenfalls erleichtern. Dies gilt insbesondere bei Verwendung eines Doppelplattenträgers 1, bei welchem die untere Platte 4 in die Führungsnut 53 auf der Unterseite 58 aufgenommen, die obere Platte 4 in eine Führungsnut 53 auf der Oberseite 57 aufgenommen und der Doppelplattenträger 1 somit auf einfache Weise in die Transfervorrichtung 40 aufgenommen werden kann. Im Zusammenspiel mit der Anschlagfläche 54 kann die mindestens eine Führungsnut 53 das Einbringen des Pipettenträgers 41 weiter erleichtern.

Fig. 22 zeigt einen Querschnitt durch ein Transfersystem 55 mit einer Transfervorrichtung 40 und einem Pipettenträger 41. Die inneren Querstreben 46 können einen sich verjüngenden konischen Querschnitt aufweisen. Der Pipettenträger 41 ist optional mit Pipettenspitzen 2 bestückt. Der Pipettenträger 41 ist beispielhaft als Doppelplattenträger 1 mit einer oberen Platte 3 und einer unteren Platte 4 ausgestaltet; könnte aber auch als Einzelplattenträger 1 ausgestaltet sein. Aus der Figur 22 wird deutlich, dass der konische Querschnitt der inneren Querstreben 46 über die ganze Höhe der Querstreben 46 an den, insbesondere sich über die Höhe verändernden, Außendurchmesser der Pipettenspitzen angepasst ist. Eine Kraft, die mittels einer Pipettiervorrichtung 42 auf die Transfervorrichtung 40 in Richtung der Oberseite 57 ausgeübt wird, wird mittels des sich verjüngenden konischen Abschnitts besonders vorteilhaft auf die Oberseite 57 und die Bünde 2c der Pipettenspitzen 2 übertragen. Dies erleichtert insbesondere eine Abdichtung der Bünde 2c gegen eine Dichtplatte der Pipettiervorrichtung 42.

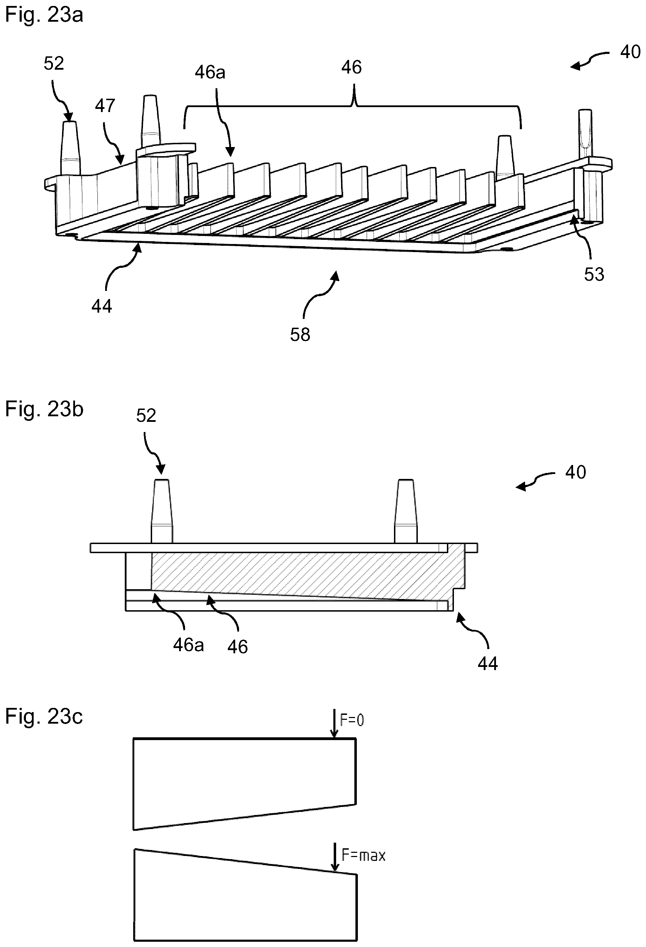

In den Figuren Fig. 23a-c ist eine weitere Ausgestaltung der erfindungsgemäßen Transfervorrichtung 40 gezeigt. Die inneren Querstreben 46 können auf der Unterseite 58 derart abgeschrägt sein, dass sich eine Höhe der inneren Querstreben 46 von der Längsstrebe 44 zu einem der Längsstrebe 44 abgewandten Ende 46a der inneren Querstreben 46 verkleinert. Fig. 23b zeigt einen Querschnitt durch die Transfervorrichtung 40, welche die Abschrägung der inneren Querstreben 46 schematisch verdeutlicht. Die Abschrägung der inneren Querstreben 46 ist insbesondere auf einen Krafteintrag durch die Pipettiervorrichtung 42 angepasst, welcher von der Unterseite 58 auf die Transfervorrichtung 40 ausgeübt wird. Beispielsweise können die inneren Querstreben 46 derart abgeschrägt sein, dass sich die Höhe der inneren Querstreben 46 zwischen 0,05° und 6°, insbesondere zwischen 0,05° und 3° verringert. In Fig. 23c ist schematisch der Effekt der Abschrägung der inneren Querstreben 46 dargestellt. Ohne Krafteinwirkung auf die inneren Querstreben 46 bzw. auf die Transfervorrichtung 40 sind die inneren Querstreben 46 abgeschrägt, wie beschrieben. Bei der Kraftwirkung, insbesondere durch die Pipettiervorrichtung 42, kommt es zu einer Verformung der inneren Querstreben 46, derart dass die Unterseite 58 der inneren Querstreben 46 sich einer horizontalen Lage annähert oder diese erreicht. Die Kraft auf die Transfervorrichtung 40 in der Pipettiervorrichtung 42 kann in Richtung der Oberseite 57 ausgeübt werden, so dass die Transfervorrichtung gegen eine Fläche der Pipettiervorrichtung 42, insbesondere einer Dichtplatte, gedrückt wird. Die inneren Querstreben 46 können für die Kraftübertragung von der Pipettiervorrichtung 42 auf den Pipettenträger 41 dienen. Der Pipettenträger kann ein Einmalartikel sein, welcher höhere Fertigungstoleranzen aufweist als die Transfervorrichtung 40. Die Abschrägung der inneren Querstreben 46 sorgt somit für einen Ausgleich der Fertigungstoleranzen des Pipettenträgers 41 und kann bewirken, dass eine Dichtplatte 72 der Pipettiervorrichtung 42 bei Ausübung der Kraft auf die Transfervorrichtung 40 nicht durch den Pipettenträger 41 beschädigt wird.

In Fig. 24 ist eine weitere Ausgestaltung der erfindungsgemäßen Transfervorrichtung 40 gezeigt. Die Transfervorrichtung 40 kann am Rahmen 47 ein Zugriffselement 61 aufweisen, wie beispielsweise ein Absatz, eine Kante oder eine Fläche, mittels welcher eine Kraft auf die Transfervorrichtung 40 ausübbar ist. Im gezeigten Beispiel ist das Zugriffselement 61 als Fläche ausgestaltet.

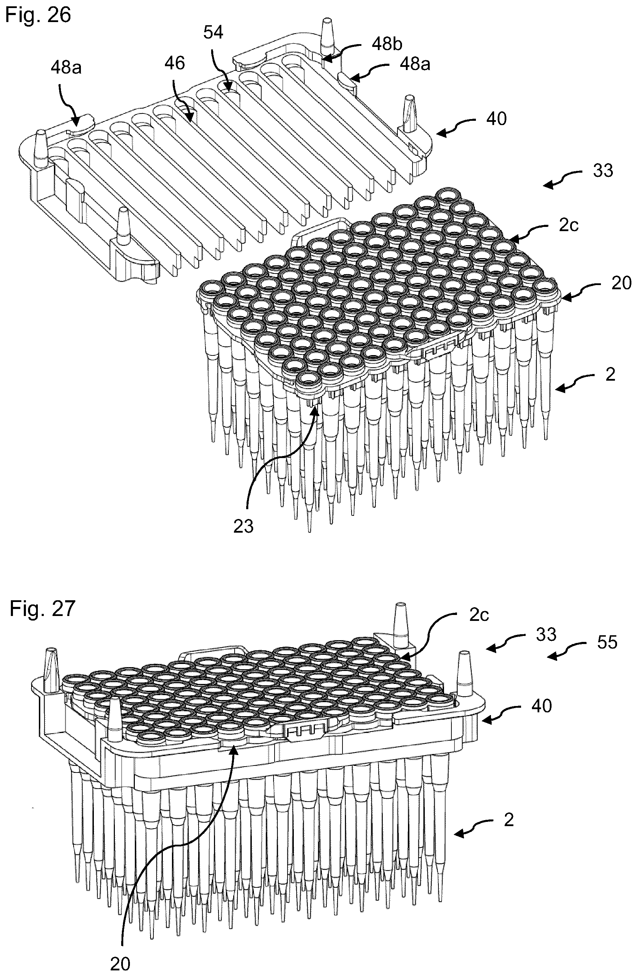

In den Figuren Fig. 25-27 ist eine Ausgestaltung eines erfindungsgemäßen Transfersystems 55 mit einer Transfervorrichtung 40 und einem Einzelplattenträger 20 dargestellt. Das Transfersystem 55 umfasst optional eine Mehrzahl an Pipettenspitzen 2, welche in die Aussparungen 22 eingebracht sind. Fig. 26 zeigt eine Explosivansicht des Transfersystems 55, in welcher die Transfervorrichtung 40 und der Einzelplattenträger 20 bereits zur Aufnahme des Einzelplattenträgers 20 durch die Transfervorrichtung 40 ausgerichtet sind. In Fig. 27 und Fig. 25 ist die Trägeranordnung 33 vollständig in die Transfervorrichtung 40 eingebracht. Der Einzelplattenträger 20 kann derart in die Transfervorrichtung 40 eingebracht sein, dass die inneren Querstreben 46 zwischen den Ausrichtungselementen 23 angeordnet sind. Fig. 25 zeigt eine Ansicht des Transfersystem 55 auf die Enden 46a der Querstreben. Die inneren Querstreben 46 können über eine Position der Pipettenspitzen 2 hinausragen. Insbesondere wenn die inneren Querstreben 46 so ausgestaltet sind, dass zumindest eine innere Querstrebe 46 länger ist als mindestens eine weitere innere Querstrebe 46, kann die mindestens eine weitere innere Querstrebe 46 auch vor der letzten Position der Pipettenspitzen 2 enden.

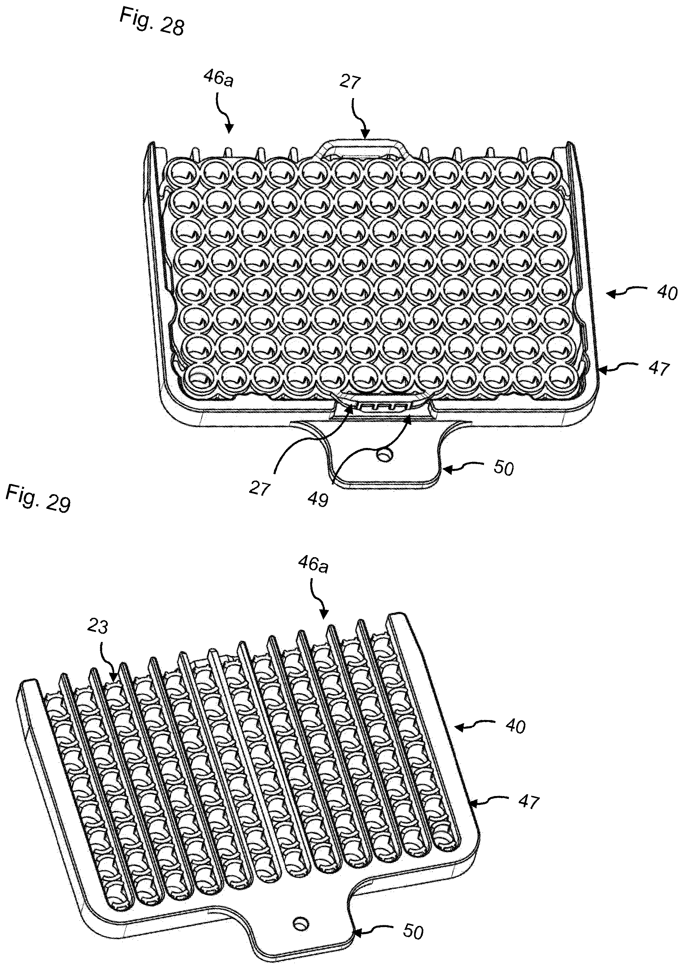

Die Figuren Fig. 28-29 zeigen eine weitere Ausgestaltung eines erfindungsgemäßen Transfersystems 55 mit einer Transfervorrichtung 40 und einem Einzelplattenträger 20. Der mindestens eine Griff 27 kann derart angeordnet sein, dass er in die Rahmenaussparung 49 eingeführt ist. Vermittels einer Kraftausübung auf den mindestens einen Griff 27, bzw. auf beide Griffe 27, kann der Einzelplattenträger 20 aus der Transfervorrichtung 40 gelöst werden.

In den Figuren Fig. 30-31 ist eine Ausgestaltung eines erfindungsgemäßen Transfersystems 55 mit einer Transfervorrichtung 40 und einem Doppelplattenträger 1 gezeigt. Optional weist das Transfersystem 55 eine Mehrzahl an Pipettenspitzen 2 auf, welche in die ersten Durchgangslöcher 5 und die zweiten Durchgangslöcher 6 eingebracht sind. In Fig. 30 ist dargestellt, wie das Trägersystem 17 in die Transfervorrichtung 40 eingebracht wird; in Fig. 31 ist das Trägersystem 17 vollständig in die Transfervorrichtung 40 eingebracht. Dabei kann der Doppelplattenträger 1 derart in die Transfervorrichtung eingebracht werden, dass die inneren Querstreben 46 zwischen der oberen Platte 3 und der unteren Platte 4 angeordnet sind. Die inneren Querstreben 46 können über eine Position der Pipettenspitzen 2 hinausragen. Insbesondere wenn die inneren Querstreben 46 so ausgestaltet sind, dass zumindest eine innere Querstrebe 46 länger ist als mindestens eine weitere innere Querstrebe 46, kann die mindestens eine weitere innere Querstrebe 46 auch vor der letzten Position der Pipettenspitzen 2 enden (vgl. Fig. 25).

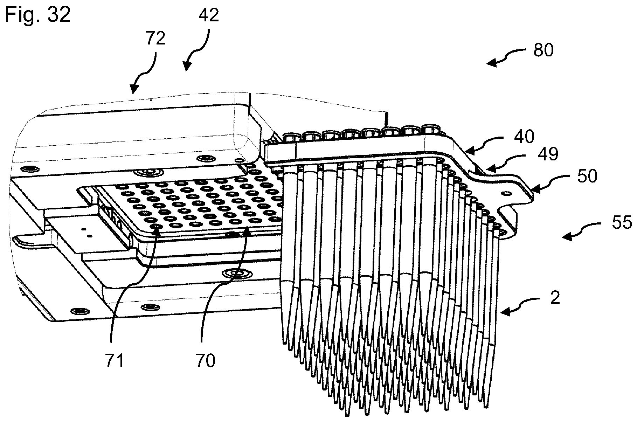

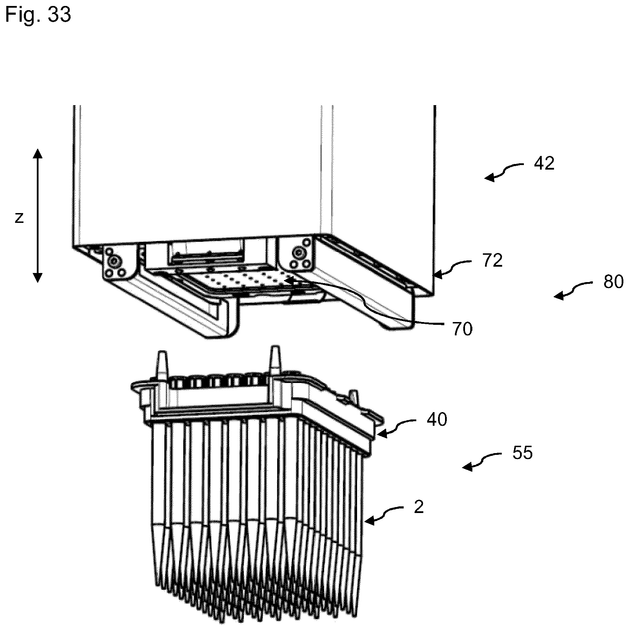

Die Figuren Fig. 32-33 zeigen zwei Ausgestaltungen eines erfindungsgemäßen Pipettiersystems 80. Das Pipettiersystem 80 umfasst eine Pipettiervorrichtung 42 und ein Transfersystem 55, umfassend eine Transfervorrichtung 40, einen Pipettenträger 41 und eine Mehrzahl von Pipettenspitzen 2. Die Pipettiervorrichtung 42 kann einen Pipettierkopf 72, in welchem Pipettierkanäle 71 zum Ansaugen und Abgeben von Flüssigkeiten in die Pipettenspitzen 2 angeordnet sind, und eine Dichtplatte 70 aufweisen, wobei die Pipettierkanäle durch die Dichtplatte 70 geführt sind. Die Dichtplatte 70 dient zum Abdichten der Pipettenspitzen 2. Die Pipettiervorrichtung 42 kann dazu eingerichtet sein, eine Kraft auf die Transfervorrichtung 40 auszuüben, derart dass die in dem Pipettenträger 41 angeordneten Pipettenspitzen 2 mit ihren Bünden 2c gegen die Dichtplatte 70 abgedichtet werden. In Fig. 32 wird das Transfersystem 55 horizontal in die Pipettiervorrichtung 42 eingebracht, während es in Fig. 33 vertikal eingebracht wird. Zur Unterstützung der vertikalen Einbringung des Transfersystems 55 können mindestens zwei, insbesondere vier, Orientierungselemente 52 am Pipettenträger 41 angeordnet sein. Hinsichtlich des Aufbaus der Pipettiervorrichtung bzw. des Pipettierkopfs, insbesondere hinsichtlich der Anordnung und Ausgestaltung der Pipettierkanäle und der Dichtplatte, wird vollumfänglich Bezug genommen auf das Gebrauchsmuster DE 20 2008 013 533 U1.

Im Folgenden soll nun beschrieben werden, wie der Pipettenträger 41 in die Transfervorrichtung 40 eingebracht wird und das so gebildete Transfersystem 55 in die Pipettiervorrichtung 42 eingebracht wird. Anschließend wird beschrieben, wie zunächst das Transfersystem 55 aus der Pipettiervorrichtung 42 und schließlich der Pipettenträger 41 wieder aus dem Transfersystem 55 entnommen werden kann.

Anhand von Fig. 20 kann ein Verfahren zum Einbringen eines Pipettenträgers 41, insbesondere eines Doppelplattenträgers 1 oder eines Einzelplattenträgers 20, in eine Transfervorrichtung 40 beschrieben werden. Dabei wird zunächst der Pipettenträger 41 in die Transfervorrichtung 40 eingebracht. Der Pipettenträger 41 weist zumindest ein Arretierelement 30 und die Transfervorrichtung 40 zumindest ein Halteelement 48 auf, wobei das mindestens eine Arretierelement 30 mit dem mindestens einen Halteelement 48 korrespondierend ausgestaltet ist. Dabei kann ein Abschnitt des Pipettenträgers 41 auf den inneren Querstreben 46 aufliegen. Insbesondere greifen die inneren Querstreben 46 zwischen die obere Platte 3 und die untere Platte 4 des Doppelplattenträgers 1 oder zwischen die Ausrichtungselemente 23 des Einzelplattenträgers 20. Dabei kann die obere Platte 3 oder die Platte 21 auf den inneren Querstreben 46 aufliegen und ggf. mittels mindestens einer Anschlagfläche 54 und/oder mindestens einer Führungsnut 53 geführt werden. Anschließend wird der Pipettenträger 41 in der Transfervorrichtung 40 arretiert, indem eine erste Kraft auf den Pipettenträger 41 in Richtung der Längsstrebe 44 ausgeübt wird, bis das mindestens eine Halteelement 48 mit dem mindestens einen Arretierelement 30 greift.

Das solchermaßen zusammengesetzte Transfersystem 55 kann dann manuell oder automatisiert in die Pipettiervorrichtung 42 eingebracht werden. Im Falle einer horizontalen Einbringung in die Pipettiervorrichtung 42, wie beispielhaft in Fig. 32 gezeigt, kann das Transfersystem 55 mittels eines Haltegriffs 50 der Transfervorrichtung 40 eingebracht werden. Für das automatisierte Einbringen kann zudem ein Zentrierelement 51 im Haltegriff 50 verwendet werden. Im Falle einer vertikalen Einbringung in die Pipettiervorrichtung 42, wie beispielhaft in Fig. 33 gezeigt, kann der Pipettierkopf 72 in z-Achse verfahren werden, um das Transfersystem 55 mithilfe der Orientierungselemente 52 aufzunehmen.

Um einen Pipettiervorgang durchführen zu können, müssen die Pipettenspitzen 2 gegen die Dichtplatte 70 abgedichtet werden. Hierfür kann mittels der Pipettiervorrichtung 42 jeweils eine Anzugskraft auf beiden Längsseiten des Transfersystem 55 ausgeübt werden, so dass das Transfersystem 55 gegen die Dichtplatte 70 gedrückt wird. Ist der Pipettenträger 41 ein Doppelplattenträger 1, so kann die Anzugskraft auf das Zugriffselement 61 der Transfervorrichtung 40 und das Krafteintragselement 14 des Doppelplattenträgers 1 ausgeübt werden. Hierfür kann die Pipettiervorrichtung 42 entsprechende Anschlagselemente aufweisen, die gegen das Zugriffselement 61 und das Krafteintragungselement 14 gedrückt werden. Ist der Pipettenträger 1 ein Einzelplattenträger 20, so kann die Anzugskraft auf das Zugriffselement 61 der Transfervorrichtung 40 und das Eingriffselement 60 der Transfervorrichtung 40 ausgeübt werden. Auch in diesem Fall kann die Pipettiervorrichtung 42 entsprechende Anschlagselemente aufweisen, die gegen das Zugriffselement 61 und das Eingriffselement 60 gedrückt werden. Die Anschlagselemente können auf schwenkbaren Armen angeordnet sein.

Nach dem Abdichten des Transfersystems 55 in der Pipettiervorrichtung 42 kann dann ein Pipettiervorgang durchgeführt werden. Nach Abschluss des Pipettiervorgangs kann die Anzugskraft gelöst und das Transfersystem 55 entweder mittels des Pipettierkopfs 72 abgelegt oder mittels des Haltegriffs 50 aus der Pipettiervorrichtung 42 entnommen werden.

In einem weiteren Schritt kann der Pipettenträger 41 aus dem Transfersystem 55 entnommen werden. Hierfür muss die Arretierung zwischen dem mindestens einen Arretierelement 30 und dem mindestens einen Halteelement 48 gelöst werden. Dies kann geschehen, indem eine zweite Kraft auf den Pipettenträger 41 in Richtung einer Unterseite 58 der Kammstruktur 43 ausgeübt wird, so dass sich die Arretierung zwischen dem mindestens einen Halteelement 48 und dem mindestens einen Arretierelement 30 löst. Die zweite Kraft kann manuell oder automatisiert ausgeübt werden. Im Falle eines Einzelplattenträgers 20 kann die zweite Kraft auf den mindestens einen Griff 27 des Einzelplattenträgers 20 ausgeübt werden; bevorzugt weist der Einzelplattenträger 20 zwei Griffe 27 auf, auf welche beide gleichzeitig die zweite Kraft ausgeübt wird. Im Falle eines Doppelplattenträgers 1 kann die zweite Kraft auf das mindestens eine Greifelement 13 ausgeübt werden. Die Transfervorrichtung 40 kann in beiden Fällen eine Rahmenaussparung 49 aufweisen, in welche der Griff 27 bzw. das Greifelement 13 hineinragt, so dass ein Bediener oder Roboter den Griff 27 bzw. das Greifelement 13 leicht erreichen und bedienen kann.

### Bezugszeichenliste

- 1: Doppelplattenträger
- 1a: Querachse des Doppelplattenträgers
- 2: Pipettenspitzen
- 2a: distaler Endbereich
- 2b: proximaler Endbereich
- 2c: Bund
- 3: obere Platte
- 3a: erste Längsseite der oberen Platte
- 3b: Mitte der oberen Platte
- 3c: zweite Längsseite der oberen Platte
- 4: untere Platte
- 4a: erste Längsseite der unteren Platte
- 5: erste Durchgangslöcher
- 6: zweite Durchgangslöcher
- 7: Seitenwand
- 8: Steg
- 9: Umrandung
- 10: Radiensegment
- 11: Abstandshalter
- 12: Materialschwächer
- 13: Greifelement
- 14: Krafteintragselement
- 15: Codierbereich
- 16: Codierelement
- 17: Trägersystem
- 20: Einzelplattenträger
- 20a: Querachse
- 21: Platte
- 21a: Längsseite der Platte
- 21b: Querseite der Platte
- 22: Aussparungen
- 23: Ausrichtungselemente
- 24: Radiensegment
- 26: Auflageelemente
- 27: Griff
- 28: Identifizierungsbereich
- 29: Identifizierungselement
- 30: Arretierelement
- 30a: Rastnase
- 30b: Ausbuchtung
- 31: Oberseite der Platte
- 32: Unterseite der Platte
- 33: Trägeranordnung
- 34: Verstärkungselemente
- 35: Abstandshalter
- 36: Materialreduzierer
- 40: Transfervorrichtung
- 41: Pipettenträger
- 42: Pipettiervorrichtung
- 43: Kammstruktur
- 44: Längsstrebe
- 44a: Fläche
- 45: äußere Querstreben
- 46: innere Querstreben
- 46a: Ende der inneren Querstreben
- 47: Rahmen
- 48: Halteelement
- 48a: Überhang
- 48b: Ausbuchtung
- 48c: Radiensegment
- 49: Rahmenaussparung
- 50: Haltegriff
- 51: Zentrierelement
- 52: Orientierungselement
- 53: Führungsnut
- 54: Anschlagfläche
- 55: Transfersystem
- 57: Oberseite
- 58: Unterseite
- 59: Mitte der Kammstruktur
- 60: Eingriffselement
- 61: Zugriffselement
- 70: Dichtplatte
- 71: Pipettierkanal
- 72: Pipettierkopf
- 80: Pipettiersystem

## Patentansprüche

1. Transfervorrichtung (40) zum Einbringen eines Pipettenträgers (41) in eine Pipettiervorrichtung (42), mit
- einer Kammstruktur (43) mit einer Längsstrebe (44) und einer Mehrzahl an rechtwinklig dazu angeordneten Querstreben (45, 46), welche parallel und äquidistant zueinander angeordnet sind und welche zwei äußere Querstreben (45) und mehrere zwischen den äußeren Querstreben (45) angeordneten inneren Querstreben (46) umfassen, wobei die Längsstrebe (44) und die beiden äußeren Querstreben (45) in Form eines dreiseitigen Rahmens (47) ausgebildet sind, wobei die Kammstruktur (43) eine Oberseite (57) und eine Unterseite (58) aufweist,
- wobei die inneren Querstreben (46) einen sich in Richtung der Oberseite (57) verjüngenden konischen Querschnitt aufweisen.

2. Transfervorrichtung (40) nach Anspruch 1,
wobei der konische Querschnitt derart ausgestaltet ist, dass der konische Querschnitt und ein Außendurchmesser der Pipettenspitzen (2) über die ganze Höhe der inneren Querstreben (46) aneinander angepasst sind.

3. Transfervorrichtung (40) nach einem der vorherigen Ansprüche,
wobei die Transfervorrichtung mindestens ein am Rahmen (47) angeordnetes Halteelement (48) aufweist, welches derart ausgestaltet ist, dass der Pipettenträger (41) in mindestens einer Achse in der Transfervorrichtung (40) arretierbar ist.

4. Transfervorrichtung (40) nach einem der vorherigen Ansprüche,
wobei der Rahmen (47) im Bereich der Längsstrebe (44) eine Rahmenaussparung (49) aufweist.

5. Transfervorrichtung (40) nach einem der vorherigen Ansprüche,
wobei der Rahmen (47) mindestens eine umlaufende Führungsnut (53) aufweist.

6. Transfervorrichtung (40) nach einem der vorherigen Ansprüche,
wobei der Rahmen (47) mindestens eine Anschlagfläche (54) aufweist, welche zumindest entlang der Längsstrebe (44) angeordnet ist und welche auf derselben Höhe des Rahmens (47) wie die Oberseite der inneren Querstreben (46) angeordnet ist, oder welche zwischen den Querstreben (45,46) angeordnet ist.

7. Transfervorrichtung (40) nach einem der vorherigen Ansprüche,
wobei die inneren Querstreben (46) an einem der Längsstrebe (44) abgewandten Ende (46a) mindestens ein Eingriffselement (60) aufweisen, mittels welchem eine Kraft auf die Transfervorrichtung (40) ausübbar ist.

8. Transfervorrichtung (40) nach einem der vorherigen Ansprüche,
wobei der Rahmen (47) ein Zugriffselement (61) aufweist, wie beispielsweise ein Absatz, eine Kante oder eine Fläche, mittels welchem eine Kraft auf die Transfervorrichtung (40) ausübbar ist.

9. Transfervorrichtung (40) nach einem der vorherigen Ansprüche,
wobei mindestens eine innere Querstrebe (46) eine größere Länge aufweist als mindestens eine weitere innere Querstrebe (46).

10. Transfervorrichtung (40) nach einem der vorherigen Ansprüche,
wobei die inneren Querstreben (46) von den äußeren Querstreben (45) zu einer Mitte (59) der Kammstruktur (43) länger werden.

11. Transfervorrichtung (40) nach einem der vorherigen Ansprüche,
wobei eine oder zwei inneren Querstreben (46) in der Mitte (59) der Kammstruktur kürzer sind als die sie umgebenden Querstreben (46).

12. Transfervorrichtung (40) nach einem der vorherigen Ansprüche,
wobei eine oder zwei innere Querstreben (46) länger sind als die restlichen inneren Querstreben (46).

13. Transfervorrichtung (40) nach einem der vorherigen Ansprüche,
wobei die inneren Querstreben (46) auf der Unterseite (58) derart abgeschrägt sind, dass sich eine Höhe der inneren Querstreben (46) von der Längsstrebe (44) zu einem der Längsstrebe (44) abgewandten Ende (46a) der inneren Querstreben (46) verkleinert.

14. Transfersystem (55) umfassend
- einen Pipettenträger (41), insbesondere einen Doppelplattenträger (1) oder einen Einzelplattenträger (20), und
- eine Transfervorrichtung nach einem der vorherigen Ansprüche,
wobei der Pipettenträger (41) in die Transfervorrichtung (55) einbringbar ist.

15. Pipettiersystem (80) umfassend
- ein Transfersystem (55) nach einem der vorherigen Ansprüche,
- einer Pipettiervorrichtung (42) mit einem Pipettierkopf (72) mit einer Dichtplatte (70) und einer Mehrzahl an Pipettierkanälen (71) zum Ansaugen und Abgeben von Flüssigkeiten in die Pipettenspitzen (2), wobei die Pipettierkanäle (71) durch die Dichtplatte (70) geführt sind,
wobei das Transfersystem (55) in die Pipettiervorrichtung (72) einbringbar ist, wobei die Pipettiervorrichtung (72) dazu eingerichtet ist, eine Kraft auf die Transfervorrichtung (55) auszuüben, derart dass die in dem Pipettenträger (41) angeordneten Pipettenspitzen (2) gegen die Dichtplatte (70) abgedichtet werden.
